(19) Europäisches Patentamt
European Patent Office
Office européen des brevets

(11) **EP 2 892 729 B1**

(12) # EUROPÄISCHE PATENTSCHRIFT

(45) Veröffentlichungstag und Bekanntmachung des Hinweises auf die Patenterteilung:
**21.03.2018   Patentblatt 2018/12**

(51) Int Cl.:
***B42D 15/00*** *(2006.01)*   ***G02B 5/18*** *(2006.01)*

(21) Anmeldenummer: **13756896.0**

(22) Anmeldetag: **03.09.2013**

(86) Internationale Anmeldenummer:
**PCT/EP2013/068193**

(87) Internationale Veröffentlichungsnummer:
**WO 2014/033324 (06.03.2014 Gazette 2014/10)**

(54) **SICHERHEITSELEMENT SOWIE SICHERHEITSDOKUMENT**

SECURITY ELEMENT AND SECURITY DOCUMENT

ÉLÉMENT DE SÉCURITÉ ET DOCUMENT DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.09.2012   DE 102012108169**

(43) Veröffentlichungstag der Anmeldung:
**15.07.2015   Patentblatt 2015/29**

(73) Patentinhaber: **OVD Kinegram AG**
**6301 Zug (CH)**

(72) Erfinder:
• **TOMPKIN, Wayne, Robert**
**5400 Baden (CH)**

• **WALTER, Harald**
**8810 Horgen (CH)**
• **MADER, Sebastian**
**6340 Baar (CH)**

(74) Vertreter: **Louis Pöhlau Lohrentz**
**Patentanwälte**
**Postfach 30 55**
**90014 Nürnberg (DE)**

(56) Entgegenhaltungen:

| | |
|---|---|
| EP-A2- 0 075 674 | WO-A1-01/00418 |
| WO-A1-01/02192 | WO-A1-02/091041 |
| WO-A1-03/070482 | WO-A1-2007/079548 |
| WO-A1-2008/003949 | DE-A1-102007 023 560 |
| DE-A1-102008 024 147 | |

**Beschreibung**

Die Erfindung betrifft ein Sicherheitselement sowie ein Sicherheitsdokument mit einem Sicherheitselement.

Es ist bekannt, Banknoten mit Wasserzeichen oder Sicherheitsfäden auszustatten. Diese Sicherheitselemente stellen ein im Durchlicht erkennbares Sicherheitsmerkmal bereit. Zur Überprüfung dieser Sicherheitsmerkmale wird die Banknote zwischen einer Lichtquelle, beispielsweise eine künstliche Lichtquelle wie einer Neonröhre oder Glühbirne oder einer natürliche Lichtquelle, wie beispielsweise der Sonne, und dem Betrachter angeordnet und das Erscheinungsbild der Banknote bei einer derartigen Durchlichtbetrachtung überprüft. Bei dieser Betrachtungsweise wird durch die Veränderung der Transmissivität des Sicherheitsdokuments in dem mit dem Wasserzeichen bzw. Sicherheitsfaden belegten Bereich das durch die Banknote transmittierte Licht in unterschiedlichen Bereichen der Banknote unterschiedlich abgeschwächt, sodass ein entsprechender Kontrast für den menschlichen Betrachter als Sicherheitsmerkmal erkennbar wird.

Der Erfindung liegt nun die Aufgabenstellung zugrunde, ein Sicherheitselement bzw. Sicherheitsdokument mit erhöhter Fälschungssicherheit anzugeben.

Die WO 2008/003949 A1 beschreibt ein optisches Sicherheitselement nach dem Oberbegriff des Anspruchs 1 mit einem Substrat. Das Substrat weist eine transparente Region auf, welche geprägte Bereiche mit einem Beugungsgitter und einen ungeprägten Bereich aufweist, wobei der ungeprägte Bereich zwischen den geprägten Bereichen mit dem Beugungsgitter angeordnet ist.

Die WO 03/070482 A1 beschreibt ein Sicherheitselement zur Einlagerung in oder Applikation auf ein Sicherheitsdokument, wobei das Sicherheitselement von beiden Seiten aus des Sicherheitsdokuments aus visuell erkennbar ist.

Die WO 01/00418 A1 beschreibt ein Verfahren zur Herstellung eines Sicherheitsdokuments, welches ein Substrat und eine optisch diffraktive Struktur umfasst. Die optisch diffraktive Struktur wird hierbei durch Bestrahlung der Oberfläche des Substrats mittels eines Lasers erzeugt, der gezielt die Oberfläche des Substrats abladiert, um hierdurch die optisch diffraktive Struktur zu erzeugen. Die WO 2007/079548 A1 beschreibt ein Verfahren zur Herstellung eines personalisierten Sicherheitsdokuments, wobei eine opake Schicht Aperturen derart aufweist, dass bei Beleuchtung der opaken Schicht mit kollimiertem Licht, ein Projektionsbild erzeugt wird.

Die DE 10 2007 023 560 A1 beschreibt einen Mehrschichtkörper mit einem Trägersubstrat und einer transparenten Schicht, die zumindest teilweise in einem Fenster des Trägersubstrats angeordnet ist. Die transparente Schicht weist hierbei varrierende Brechzahlen derart auf, dass ein optisches Element gebildet wird, wobei der Mehrschichtkörper im Auflicht eine in Vorderansicht und in Rückansicht unterschiedliche optische Wirkung ausbildet.

Die EP 0 075 674 A2 beschreibt ein synthetisch hergestelltes, maschinenlesbares optisches Echtheitsmerkmal für Wertdokumente, welches eine lichtbeugende Phasenstruktur besitzt, deren effektive Sägezahnhöhen gleich einem ungeradzahligen Vielfachen der Wellenlänge des verwendeten Lichts ist und deren Sägezahn-Basislänge mindestens den dreifachen Wert und höchstens den dreissigfachen Wert dieser Wellenlängen besitzt.

Die DE 10 2008 024 147 A1 beschreibt ein optisches Sicherheitselement in Form eines Mehrschichtkörpers mit in einem Bereich des Sicherheitselements ausgebildeten Projektionselement. Das Projektionselement ist hierbei aus einer Vielzahl von opaken ersten und transparenten zweiten Zonen gebildet, so dass das aus den ersten und zweiten Zonen gebildete Muster eine diffraktive Optik zur Darstellung einer Information ausbildet.

Die WO 01/02192 A1 beschreibt ein Sicherheitsdokument mit einem transparenten Fenster. In dem transparenten Fenster ist ein optischer Filter angeordnet, der in mindestens einer Zone eine diffraktive Struktur aufweist.

Diese Aufgabe wird von einem Sicherheitselement, nach Anspruch 1 gelöst. Diese Aufgabe wird weiter von einem Sicherheitsdokument mit einem solchen Sicherheitselement gelöst.

Unter einem im Durchlicht transparenten Bereich wird hierbei ein Bereich verstanden, der bei zumindest einem Kippwinkel eine Transmissivität für zumindest einen Wellenlängenbereich von mindestens 30 nm aus dem Wellenlängenbereich von 460 nm bis 660 nm von mehr als 20%, insbesondere mehr als 50% aufweist. Bevorzugt ist bei zumindest einem Kippwinkel im Wellenlängenbereich von 460 nm bis 660 nm die Transmissivität mehr als 50% und weiter bevorzugt in mindestens der Hälfte des Wellenlängenbereichs von 460 nm bis 660 nm mehr als 80%. Hierbei werden als transmissive Beugungsstrukturen Beugungsstrukturen eingesetzt, die auf Erzielung einer Beugungswirkung in Transmission derart ausgelegt werden, dass die mit ihnen belegten Teilbereiche des ersten Bereichs jeweils bei Durchlichtbetrachtung gegen eine weißes Licht gerichtet abstrahlende Lichtquelle beim Verkippen und/oder Verdrehen des Sicherheitselements einen für den menschlichen Betrachter erkennbaren Farbänderungseffekt als optisches Sicherheitsmerkmal zeigen. Beim Betrachten des Sicherheitselements im Durchlicht zeigt so das Sicherheitselement in dem Teilbereich beim Verkippen und/oder Verdrehen einen Wechsel beispielsweise zwischen einem weißen oder farblosen transparenten Erscheinungsbild und beispielsweise einem farbig roten oder farbig blauen Erscheinungsbild. Alternativ kann der Farbänderungseffekt auch umgekehrt ablaufen, d.h. das Sicherheitselement zeigt in dem Teilbereich beim Verkippen und/oder Verdrehen einen Wechsel beispielsweise zwischen einem farbig roten oder farbig blauen Erscheinungsbild und einem weißen oder farblosen transparenten Erscheinungsbild. Eine weitere Alternative ist ein Farbänderungseffekt von beispielsweise farbig rot zu farbig blau. In letzterem Fall weist das Sicherheitsmerkmal bei allen Betrachtungs- und/oder Verdrehwinkeln ein farbiges Erscheinungsbild auf. Das so generierte Sicherheitsmerkmal unterscheidet sich deutlich von dem Erscheinungsbild der oben beschriebenen bekannten Durchsichtssicherheitsmerkmale und stellt ein auffälliges Sicherheitsmerkmal zur Verfügung. In dem ersten Bereich sind zwei oder mehr unterschiedliche transmissive Beugungsstrukturen angeordnet, die bei Durchlichtbetrachtung ein optisches Sicherheitsmerkmal zeigen. Diese unterschiedlichen transmissiven Beugungsstrukturen sind hierbei so ausgelegt, dass sie bei Durchlichtbetrachtung gegen eine weißes Licht abstrahlende Lichtquelle beim Verkippen und/oder Verdrehen des Sicherheitselements unterschiedliche Farbänderungseffekte zeigen, sich insbesondere in Bezug auf den Kippwinkel und/oder Verdrehwinkel, unter dem eine Farbe generiert wird, oder in Bezug auf den Farbwert, der unter einem bestimmten Kippwinkel und/oder Verdrehwinkel generiert wird, unterscheiden. Durch die Verwendung von zwei oder mehr unterschiedlichen transmissiven Beugungsstrukturen lassen sich eine Vielzahl einprägsamer und überraschender Sicherheitsmerkmale realisieren, wie auch im Folgenden beschrieben. Das Kippen oder Verdrehen kann beliebig kombiniert werden. Beispielsweise wird erst um einen Winkel gekippt und in dieser gekippten Ebene dann verdreht oder das Verdrehen findet unter mehreren unterschiedlichen Kippwinkeln statt.

Beispielsweise können auch Durchlicht-Beugungseffekte in Nullter Ordnung mit Durchlicht-Beugungseffekten in Erster Ordnung oder höherer Ordnung kombiniert werden.

Gemäß eines bevorzugten Ausführungsbeispiels der Erfindung weist der erste Bereich ein oder mehrere erste Zonen auf, die mit einer ersten der transmissiven Beugungsstrukturen belegt sind, und ein oder mehrere zweiten Zonen auf, die mit einer zweiten der transmissiven Beugungsstrukturen belegt sind. Die ersten transmissiven Beugungsstrukturen unterscheiden sich hierbei von den zweiten transmissiven Beugungsstrukturen. Die erste Zone oder die ersten Zonen sind hierbei jeweils vorzugsweise vollflächig mit der ersten Beugungsstruktur belegt. Die zweite Zone oder die zweiten Zonen sind hierbei jeweils vorzugsweise vollflächig mit der zweiten transmissiven Beugungsstruktur belegt.

Weiter ist es auch möglich, dass der erste Bereich neben den ein oder mehreren ersten und zweiten Zonen noch weitere Zonen aufweist, die mit weiteren der ein oder mehreren transmissiven Beugungsstrukturen belegt sind, die sich von der ersten und zweiten Beugungsstruktur unterscheiden. Vorzugsweise weist der erste Bereich so noch ein oder mehrere dritte Zonen und/oder ein oder mehrere vierte Zonen auf, wobei die dritten Zonen mit einer dritten der ein oder mehreren transmissiven Beugungsstrukturen bzw. die vierten Zonen mit einer vierten der ein oder mehreren transmissiven Beugungsstrukturen belegt sind. Die erste, zweite, dritte und ggf. vierte Beugungsstruktur unterscheiden sich hierbei jeweils wechselseitig voneinander.

Die erste und die zweite transmissive Beugungsstruktur unterscheiden sich vorzugsweise durch ein oder mehrere ihrer Strukturparameter und/oder durch ihren Aufbau voneinander. Hier hat es sich bewährt, dass die erste und zweite Beugungsstruktur sich beispielsweise in ihrer Reliefform und/oder ihrer Relieftiefe bzw. Gittertiefe und/oder ihrem Azimutwinkel und/oder ihrer Gitterperiode voneinander unterscheiden. Unter Reliefform wird hierbei die Formgebung der Strukturelemente verstanden, aus denen die transmissive Beugungsstruktur gebildet wird. Hierbei können die ersten und zweiten transmissiven Beugungsstrukturen beispielsweise unterschiedliche symmetrische Reliefformen aufweisen, beispielsweise die erste Beugungsstruktur eine sinusförmige Reliefform und die zweite transmissive Beugungsstruktur eine rechteckförmige Reliefform aufweisen. Weiter ist es auch möglich, dass die erste Beugungsstruktur eine asymmetrische Reliefform und die zweite Beugungsstruktur eine symmetrische Reliefform oder umgekehrt aufweisen oder sich die erste oder zweite Beugungsstruktur in Bezug auf die Asymmetrie der Reliefform unterscheidet. Die Parameter, welche den Farbänderungseffekt am meisten beeinflussen, sind vorzugsweise die Gitterperiode und die Gittertiefe sowie der Azimutwinkel.

Weiter ist es vorteilhaft, wenn die erste und zweite transmissive Beugungsstruktur von unterschiedlichen Arten von transmissiven Beugungsstrukturen gebildet sind. Unter unterschiedlichen Arten von transmissiven Beugungsstrukturen werden hierbei Beugungsstrukturen verstanden, welche über einen unterschiedlichen Schichtaufbau verfügen und/oder welche aus unterschiedlichen der unten beschriebenen Klassen von transmissiven Beugungsstrukturen ausgewählt sind, beispielsweise eine Kombination der unten beschriebenen ersten Klasse von transmissiven Beugungsstrukturen und der unten beschriebenen zweiten oder dritten Klasse von transmissiven Beugungsstrukturen.

Weiter ist es vorteilhaft, wenn sich die erste und die zweite transmissive Beugungsstruktur in dem in Durchlichtbetrachtung für den menschlichen Betrachter erkennbaren Effekt unterscheiden und sich insbesondere in ein oder mehrere der folgenden Parameter unterscheiden: Unterschied im Farbspektrum des transmittierten Lichts in ungekipptem und/oder unverdrehtem Zustand, Unterschied im Farbspektrum des transmittierten Lichts in gekipptem und/oder gedrehtem Zustand, Kippwinkel oder Kippwinkelbereich, Drehwinkel oder Drehwinkelbereich, in dem das Farbspektrum verändert wird, Transmissivität in ungekipptem und/oder gedrehtem Zustand, Transmissivität in gekipptem und/oder gedrehtem Zustand, Ausrichtung der Kippachse und/oder Drehachse für die Erzielung dieser Effekte.

Die ein oder mehreren ersten und ein oder mehreren zweiten Zonen können hierbei voneinander beabstandet oder benachbart zueinander im ersten Bereich des Sicherheitselements angeordnet sein.

Bzgl. der Anordnung des ersten Bereichs, der Teilbereiche des ersten Bereichs und der Zonen wird hierbei von einer Betrachtung des Sicherheitselements in Draufsicht ausgegangen.

Es hat sich bewährt, dass benachbarte erste und zweite Zonen weniger als 20 μm, bevorzugt weniger als 5 μm, besonders bevorzugt weniger als 2 μm voneinander beabstandet sind.

Gemäß eines bevorzugten Ausführungsbeispiels der Erfindung weisen die ersten und zweiten Zonen jeweils laterale Abmessungen von mehr als 300 μm auf. Vorzugsweise weist die erste und die zweite Zone eine Breite und eine Länge von jeweils mehr als 500 μm, vorzugsweise von mehr als 1 mm auf. Die ersten und zweiten Zonen weisen so bei dieser Ausführungsform vorzugsweise laterale Abmessungen auf, bei der die Formgebung der ersten und zweiten Zonen von dem menschlichen Betrachter bei einem normalen Betrachtungsabstand aufgelöst werden kann.

Unter lateraler Abmessung werden hier die Abmessungen bei Draufsicht auf das Sicherheitselement, d.h. die Abmessungen in der von der Oberseite bzw. Unterseite des Sicherheitselements aufgespannten Ebene verstanden. Unter lateraler Abmessung werden so insbesondere die Breite und die Länge der Zonen verstanden.

Vorzugsweise sind die ein oder mehreren ersten Zonen zur Ausbildung eines ersten Motivs und die ein oder mehreren zweiten Zonen zur Ausbildung eines zweiten Motivs ausgeformt. Unter Motiv wird hierbei unter anderem auch Buchstaben und Zahlen, eine Abfolge von Buchstaben und Zahlen, Logos, Wappen, Symbole, bildliche Darstellungen, beispielsweise das Porträt einer Person, Symbole oder Ähnliches verstanden. Die Motive können dabei aus einzelnen Bildelementen wie Punkten, Linien, Mosaiken, Rastern, Flächen, Graustufenverläufen oder Kombinationen davon zusammengesetzt sein.

Durch eine derartige Ausgestaltung ist es so beispielsweise möglich, ein transmissives Sicherheitsmerkmal bereitzustellen, welches beispielsweise in einem ersten Kippwinkelbereich das erste Motiv und in einem zweiten, hiervon unterschiedlichen Kippwinkelbereich das zweite Motiv zeigt, oder das erste und zweite Motiv in unterschiedlicher Farbe zeigt. Das Sicherheitsmerkmal kann das erste Motiv und das zweite Motiv oder auch ein drittes Motiv auch unter unterschiedlichen Drehwinkeln zeigen.

Weiter ist es vorteilhaft, wenn die ein oder mehreren ersten und zweiten Zonen zur Ausbildung eines Motivs ausgeformt sind, wobei die ersten Zonen einen Vordergrundbereich des Motivs ausbilden und die zweiten Zonen einen Hintergrundbereich des Motivs ausbilden. Vorzugsweise sind hierbei zumindest ein oder mehrere der ersten Zonen vollständig von einer der zweiten Zonen umgeben. Durch eine derartige Ausgestaltung können beispielsweise transmissive Sicherheitsmerkmale bereitgestellt werden, bei denen das Motiv lediglich in einem bestimmten Kippwinkelbereich aufgrund einer kontrastierenden Farbe von Vordergrundbereich und Hintergrundbereich erscheint oder sich die Farbe des Vordergrundbereichs oder Hintergrundbereichs in Abhängigkeit vom Kippwinkel verändert.

Gemäß eines weiteren bevorzugten Ausführungsbeispiels der Erfindung sind in dem ersten Bereich eine Vielzahl zweiter Zonen vorgesehen, wobei die ersten und zweiten Zonen jeweils zumindest eine laterale Abmessung von weniger als 300 μm aufweisen, insbesondere weniger als 150 μm und bevorzugt weniger als 80 μm aufweisen. Die ersten und zweiten Zonen können hierbei beispielsweise pixelförmig, beispielsweise in Form eines Quadrats, eines Achtecks oder Ähnlichem mit einer Breiten- und Längenabmessung von weniger als 300 μm ausgebildet sein oder auch streifenförmig ausgebildet sein, mit einer Breite von weniger als 300 μm und einer Länge von mehr als 300 μm. Die Streifen können dabei geradlinig oder auch wellenförmig oder zickzackförmig verlaufen. Vorzugsweise weisen die ersten und zweiten Zonen hierbei jeweils eine Breite von mehr als 5 μm, insbesondere 10 μm, weiter bevorzugt von mehr als 20 μm auf. Durch diese Mindestbreite lassen sich ungewünschte diffraktive Effekte von den Zonengrenzen reduzieren oder unterdrücken. Beispielsweise unterscheiden sich derartige streifenförmige und benachbarte Zonen in ihrem Azimutwinkel um 0,1 bis 10° und bevorzugt 0,5° bis 10°.

Wie bereits oben ausgeführt, können neben den ersten und zweiten Zonen in dem ersten Bereich noch weitere Zonen vorgesehen sein, welche mit einer transmissiven Beugungsstruktur belegt sind, die sich von der ersten und zweiten transmissiven Beugungsstruktur unterscheidet. Vorzugsweise weist der erste Bereich so dritte und/oder vierte Zonen auf, die mit dritten bzw. vierten transmissiven Beugungsstrukturen belegt sind, wobei auch die dritten bzw. vierten Zonen jeweils zumindest eine laterale Abmessung von weniger als 300 μm, insbesondere weniger als 150 μm, bevorzugt weniger als 80 μm aufweisen.

Durch die Verwendung und die Anordnung derartiger erster, zweiter, dritter und/oder vierter Zonen lassen sich zahlreiche optische Sicherheitsmerkmale generieren, welche die Fälschungssicherheit des Sicherheitselements deutlich verbessern. Außerdem erhält das Sicherheitselement eine größere optische Variabilität und/oder kann unter einer größeren Auswahl von unterschiedlichen Betrachtungs- und Beleuchtungsbedingungen wahrgenommen werden.

Gemäß eines bevorzugten Ausführungsbeispiels der Erfindung werden mittels solcher Zonen bei Durchlichtbetrachtung sichtbar werdende Echtfarbenbilder generiert, welche sich weiter unter anderem beim Verkippen und/oder Verdrehen in ihrer Farbe und ihrer Sichtbarkeit verändern können.

Vorzugsweise weist der erste Bereich hierfür einen Motivbereich auf, der in eine Vielzahl von Bildpunktbereichen unterteilt ist. Bildpunktbereiche können hierbei nicht nur eine quadratische, rautenförmige oder achteckförmige Formgebung, sondern auch eine rechteckförmige Formgebung besitzen. In zumindest einem ersten der Bildpunktbereich sind hierbei zumindest zwei unterschiedliche Zonen ausgewählt aus der Gruppe erste und zweite Zonen, der Gruppe erste, zweite und dritte Zonen, oder der Gruppe erste, zweite, dritte und vierte Zonen angeordnet.

Sind so beispielsweise drei unterschiedliche Zonen vorgesehen, so weist der erste Bildpunktbereich beispielsweise ein oder mehrere erste und zweite Zonen, ein oder mehrere zweite und dritte Zonen oder ein oder mehrere erste, zweite und dritte Zonen auf. Weiter sind diese Zonen in dem ersten Bildpunktbereich so angeordnet, dass die sich in dem ersten Bildpunktbereich bei Durchlichtbetrachtung unter zumindest einem Kippwinkel zeigende Farbe durch additive Farbmischung der von den in diesem Bildpunktbereich in den unterschiedlichen Zonen angeordneten transmissiven Beugungsstrukturen unter diesem Kippwinkel generierten Farben generiert ist. Beispielsweise können die drei unterschiedlichen Zonen bei einem Kippwinkel die Farben Rot, Grün und Blau (Rot-Grün-Blau = RGB) generieren.

Vorzugsweise weist der erste Bildpunktbereich hierbei zumindest eine laterale Abmessung von weniger als 300 $\mu$m auf.

Die Helligkeit und der Farbwert der bei Durchlichtbetrachtung im ersten Bildpunktbereich von den dort angeordneten transmissiven Beugungsstrukturen generierten Farbe wird hierbei durch die Flächengröße der im ersten Bildpunktbereich angeordneten ersten, zweiten und ggf. dritten und vierten Zonen sowie den von den ersten, zweiten und ggf. dritten und vierten transmissiven Beugungsstruktur unter diesem Kippwinkel generierten Farben bestimmt. Durch entsprechende Wahl der Flächengröße der ersten, zweiten und ggf. dritten und vierten Zonen in dem ersten Bildpunktbereich kann so die unter dem Kippwinkel und/oder Verdrehwinkel im Durchlicht im ersten Bildpunktbereich generierte Farbe eingestellt werden.

Vorzugsweise sind mindestens 10%, bevorzugt mindestens 50% und weiter bevorzugt mindestens 80% der Bildpunktbereiche als erste Bildpunktbereiche ausgebildet. Vorzugsweise sind ein oder mehrere der Bildpunktbereiche weiter als zweite Bildpunktbereiche ausgebildet, in denen jeweils nur eine Art von Zonen vorgesehen ist, so beispielsweise lediglich ein oder mehrere erste Zonen oder ein oder mehrere zweite Zonen vorgesehen sind.

Gemäß eines weiteren bevorzugten Ausführungsbeispiels der Erfindung ist in dem ersten Bereich ein in Form eines ersten Motivs ausgeformter erster Motivbereich und in Form eines zweiten Motivs ausgeformter zweiter Motivbereich vorgesehen. Der erste Motivbereich und der zweite Motivbereich überlappen sich hierbei zumindest bereichweise. Weiter ist der erste Motivbereich in eine Vielzahl von Teilbereichen unterteilt, die jeweils mit ein oder mehreren ersten Zonen belegt sind, und der zweite Motivbereich in eine Vielzahl von Teilbereichen unterteilt, die jeweils mit ein oder mehreren zweiten Zonen belegt sind. Die Teilbereiche weisen hierbei vorzugsweise zumindest eine laterale Abmessung von weniger als 300 $\mu$m auf. Im Überlappungsbereich des ersten oder zweiten Motivbereichs sind so erste und zweite Zonen vorgesehen, insbesondere benachbart zueinander vorgesehen, und insbesondere ineinandergerastert angeordnet. Weiter ist es hierbei vorteilhaft, wenn die ersten und zweiten Zonen jeweils gemäß eines ein- oder zweidimensionalen Raster angeordnet sind und sich insbesondere im Überlappungsbereich Bereiche des Rasters, welche ersten Zonen zugeordnet sind, und Bereiche des Rasters, welche zweiten Zonen zugeordnet sind, abwechseln. Die Rasterweite des Rasters beträgt vorzugsweise in zumindest eine Richtung weniger als 300 $\mu$m.

Durch diese Vorgehensweise ist es möglich, ein Sicherheitsmerkmal bereitzustellen, welches bei Durchlichtbetrachtung in einem ersten Kippwinkelbereich und/oder ersten Verdrehwinkelbereich das erste Motiv und in einem zweiten Kippwinkelbereich und/oder zweiten Verdrehwinkelbereich das zweite Motiv und ggf. in einem dritten Kippwinkelbereich und/oder dritten Verdrehwinkelbereich eine überlagerte Darstellung des ersten und zweiten Motivs zeigt. Vorzugsweise weist der erste Bereich hierbei nicht nur einen ersten Motivbereich und einen zweiten Motivbereich, sondern eine Vielzahl von Motivbereichen auf, welche jeweils mit unterschiedlichen Zonen belegt sind. Hierdurch lassen sich interessante optische Effekte wie beispielsweise eine Simulation eines Bewegungseffekts oder eines Transformationseffekts in Durchlicht generieren, bei dem beispielsweise ein erstes Motiv über ein oder mehrere Zwischenschritt in ein zweites Motiv übergeht.

Vorzugsweise sind bei diesem Ausführungsbeispiel, wie bereits oben beschrieben, die ersten Zonen und die zweiten Zonen mit unterschiedlichen Arten von transmissiven Beugungsstrukturen belegt. Hierdurch kann, wie weiter unten auch detailliert ausgeführt, noch beispielsweise das optische Erscheinungsbild eines der Motive in Abhängigkeit von dem Einsatz eines Polarisators und/oder eines Farbfilters bei Durchlichtbetrachtung verändert werden, sodass beispielsweise sich das erste Motiv, nicht jedoch das zweite Motiv, bei Einsatz eines Polarisators und/oder Farbfilters verändert. Es kann auch durch geeignete Wahl der transmissiven Beugungsstrukturen ein verstecktes Merkmal ("hidden image") erzeugt werden, bei welchem erst durch den Einsatz eines Polarisators und/oder Farbfilters ein Motiv erkennbar wird. Ein Beispiel für ein solches verstecktes Merkmal zeichnet sich durch gekreuzte transmissive Beugungsstrukturen in dem ersten Motiv (z.B. ein Kreuz eingebettet in ein quadratischen Hintergrund) und lineare transmissive Beugungsstrukturen im zweiten Motiv (z.B. der quadratische Hintergrund) aus, wobei beide transmissive Beugungsstrukturen z.B. einen gleichen oder sehr ähnlichen roten Farbeindruck bei Betrachtung ohne Polarisator und unter leicht gekippten Winkel (z.B. $\alpha=20°$) erzeugen. Durch einen linearen Polarisator betrachtet ändert sich der Farbeindruck des zweiten Motivs (z.B. von rot auf grün), während das erste Motiv nahezu unverändert bleibt. Wird der Polarisator gedreht, ändert sich der Farbeindruck des zweiten Motivs stark, das erste Motiv dagegen nicht oder kaum.

Gemäß eines bevorzugten Ausführungsbeispiels der Erfindung sind ein oder mehrere der auch insbesondere als erste, zweite, dritte oder vierte transmissive Beugungsstrukturen eingesetzten transmissiven Beugungsstrukturen wie im Folgenden beschrieben ausgestaltet:

Mindestens eine der ein oder mehreren transmissiven Beugungsstrukturen bewirkt bei Durchlichtbetrachtung einer einem Betrachter zugewandten ersten Seite des Sicherheitselements gegen eine Lichtquelle, welche weißes Licht parallel zu einer Strahlachse abstrahlt und auf einer der ersten Seite des Sicherheitselements gegenüberliegenden zweiten Seite des Sicherheitselements angeordnet ist, beim Verkippen des Sicherheitselements gegen die Strahlachse eine Veränderung der Farbe des Teilbereichs des ersten Bereichs, der mit dieser mindestens einen transmissiven Beugungsstruktur belegt ist. Vorzugsweise ist der Teilbereich hierbei insbesondere musterförmig in Form eines Motivs ausgeformt. Unter Veränderung der Farbe wird hierbei beispielsweise auch eine Änderung eines transparenten oder farblos erscheinenden Teilbereichs in ein in einer Farbe, beispielsweise rot, grün oder blau erscheinenden Teilbereich verstanden.

Vorzugsweise ist die mindestens eine transmissive Beugungsstruktur weiter so ausgebildet, dass das in einer Strahlrichtung senkrecht zu der von der zweiten Seite des Sicherheitselements aufgespannten Ebene auf die zweite Seite des Sicherheitselements einfallende Licht weitgehend in seinem Farbspektrum unverändert in Richtung der Strahlrichtung durch das Substrat transmittiert wird. Vorzugsweise beträgt hierbei die Änderung des Spektrums des einfallenden Lichts im Bereich von 460 nm bis 660 nm weniger als 15%, bevorzugt weniger als 10%, weiter bevorzugt weniger als 5%. Für eine ideal weiße Lichtquelle mit nahezu gleichbleibender Intensität über den gesamten Wellenlängenbereich bedeutet dies beispielsweise, dass die Intensität für alle Wellenlängen im Bereich 460 nm bis 660 nm nach Durchtritt durch das Sicherheitselement bis auf die angegebene Prozentzahl nahezu gleich ist. Die Transmissivität der mindestens einen transmissiven Beugungsstruktur und/oder des Sicherheitselements in Strahlrichtung ist hierbei vorzugsweise größer als 30%, weiter bevorzugt größer als 50%, und weiter bevorzugt größer als 70%.

Wird das Sicherheitselement nicht senkrecht zu der von der zweiten Seite des Sicherheitselements aufgespannten Ebene betrachtet, sondern in einem gekippten Winkel, so ändert sich das Transmissionsverhalten. Vorzugsweise transmittiert die mindestens eine transmissive Beugungsstruktur Licht, das auf die zweite Seite in einer Strahlrichtung mit einem Winkelversatz von mehr als 15°, insbesondere von mehr als 30° zur Flächennormale der von der zweiten Seite des Sicherheitselements aufgespannten Ebene einfällt, in seinem Farbspektrum verändert in Richtung senkrecht zur Flächennormale der von der zweiten Seite des Sicherheitselements aufgespannten Ebene oder in Strahlrichtung. Bei Betrachtung des mit der transmissiven Beugungsstruktur belegten Teilbereichs zeigt sich so insbesondere beim Verkippen mit einem Winkelversatz von mehr als 10°, insbesondere von mehr als 20° eine Veränderung des Farbspektrums des einfallenden Lichts, welche durch die transmissive Beugungsstruktur bewirkt wird. Alternativ zeigt sich eine Veränderung des Farbspektrums des einfallenden Lichts in diesem Bereich lediglich dann, wenn das Sicherheitselement nicht in einem Kippwinkel von mehr als 70°, insbesondere von mehr als 50° gekippt wird. Vorzugsweise beträgt hierbei der Kippwinkelbereich, bei dem diese Effekte auftreten, zwischen 10° und 70°, weiter bevorzugt zwischen 20° und 50°.

Weiter ist es auch vorteilhaft, wenn die transmissive Beugungsstruktur in einem ersten Kippwinkelbereich das einfallende Licht in seinem Farbspektrum in einer Weise verändert, welche sich von der Veränderung des Farbspektrums des einfallenden Lichts in einem zweiten Kippwinkelbereich unterscheidet.

Die transmissive Beugungsgitter werden vorzugsweise aus ein oder mehrere der folgenden Klassen von transmissiven Beugungsgittern ausgewählt:

Eine erste Klasse von transmissiven Beugungsstrukturen weist als Beugungsstruktur eine Reliefstruktur auf, welche ein durch die Parameter Reliefform, Relieftiefe, Gitterperiode und Azimutwinkel definiertes Gitter ist, wobei die Relieftiefe zwischen 900 und 1700 nm, insbesondere 1200 nm und 1500 nm und die Gitterperiode zwischen 500 nm und 1500 nm, insbesondere zwischen 600 und 1200 nm beträgt. Die erste Klasse von transmissiven Beugungsstrukturen weist bevorzugt hauptsächlich Beugungseffekte in Erster oder höherer Ordnung auf.

Vorzugsweise ist die Reliefstruktur hierbei in eine Oberfläche des Substrats abgeformt, insbesondere in die Oberfläche der ersten Seite des Sicherheitselements abgeformt. Die erste Reliefstruktur ist hierbei vorzugsweise in die dem Betrachter zugewandte Oberfläche des Sicherheitselements abgeformt. Die Grenzfläche der Reliefstruktur ist dadurch insbesondere eine Lack-Luft-Grenze.

Weiter ist es alternativ auch möglich, die transmissive Beugungsstruktur als eine zwischen zwei transparenten Schichten des Substrats abgeformten Reliefstruktur auszubilden. Vorzugsweise unterscheidet sich hierbei der Brechungsindex dieser Schichten um mindestens 0,1.

Weiter ist es vorteilhaft, wenn eine der zwei transparenten Schichten eine Replizierschicht und die andere der zwei transparenten Schichten eine poröse Schicht ist, wobei die Poren der porösen Schicht insbesondere mit Luft gefüllt sind. Bei der porösen Schicht kann es sich um eine offenporige oder geschlossenporige Schicht handeln. Durch die mikroporöse Ausformung der Schicht ist es hierbei möglich, eine Schicht bereitzustellen, deren Brechungsindex nahe dem Brechungsindex von Luft liegt.

Vorzugsweise liegt hierbei die Schichtdicke der porösen Schicht zwischen 2 und 50 $\mu$m, bevorzugt zwischen 2 und 20 $\mu$m.

Gemäß einer weiteren bevorzugten Ausführungsform ist eine der zwei transparenten Schichten eine Replizierschicht und die andere der zwei transparenten Schichten eine HRI-Schicht (HRI = High Refraction Index), beispielsweise aus ZnS, TiO$_2$, ZrO$_2$ oder Si$_3$N$_4$ oder ein Gemisch aus Polymeren und Nanopartikeln. Die Schichtdicke der HRI-Schicht beträgt dabei vorzugsweise zwischen 50 und 300 nm, insbesondere zwischen 75 und 150 nm, weiter bevorzugt zwischen 75 und 125 nm. Bei der Ausführungsform mit HRI-Schicht ist die Relieftiefe typischerweise im Bereich von 200nm bis 800nm und bevorzugt zwischen 300nm und 600nm. Die Gitterperiode liegt vorzugsweise im Bereich von 450nm bis 900nm und weiter bevorzugt zwischen 500nm und 800nm.

Die Replizierschicht besteht vorzugsweise aus einer thermoplastischen oder UVhärtbaren Lackschicht.

Die transmissiven Beugungsstrukturen einer zweiten Klasse von transmissiven Beugungsstrukturen sind wie folgt ausgebildet: Die transmissive Beugungsstruktur wird von einer Vielzahl von Elementen gebildet, wobei die Elemente jeweils zumindest eine im Wesentlichen parallel zu einer Grundebene angeordnete Elementfläche aufweisen, die Elemente in Bezug auf zumindest eine parallel zur Grundebene verlaufende erste Richtung gegeneinander versetzt angeordnet sind und die Elementflächen benachbarter Elemente in einer senkrecht zur Grundebene stehenden Richtung gemäß einer von der zumindest einen ersten Richtung abhängigen Variationsfunktion beabstandet sind mit einem ersten Abstand oder einem Vielfachen des ersten Abstands. Die Variationsfunktion ist vorzugsweise eine periodische Funktion. Weiter sind vorzugsweise in jeder Periode der Variationsfunktion die Elementflächen zumindest zweier in der zumindest einen ersten Richtung aufeinander folgender Elemente voneinander mit dem ersten Abstand beabstandet. Die Periode ist hierbei vorzugsweise kleiner als 10 $\mu$m und größer als 1 $\mu$m und insbesondere kleiner als 5 $\mu$m und größer als 2 $\mu$m gewählt. Vorzugsweise umfasst jede Periode 3 bis 10, insbesondere 3 bis 6 aufeinanderfolgende Elemente. Vorzugsweise beträgt der erste Abstand zwischen 50 und 1000 nm, insbesondere zwischen 100 und 500 nm.

Es hat sich gezeigt, dass mittels derartiger Strukturen eine besonders starke Änderung des Farbspektrums des durch die transmissive Beugungsstruktur transmittierten Lichts erzielt werden kann. Durch die Periode und die Variationsfunktion wird hierbei der Kippwinkelbereich eingestellt, in welchem durch die transmissive Beugungsstruktur eine Veränderung des Farbspektrums bei Durchlichtbetrachtung bewirkt wird. Durch die Parameter erster Abstand und Periode wird der Spektralbereich festgelegt, in welchem durch die transmissive Beugungsstruktur eine Veränderung des Farbspektrums des einfallenden Lichts im Durchlicht bewirkt wird.

Das Substrat kann hierbei eine transparente Schicht aufweisen, in welcher die Elemente eingebettet sind. Weiter ist es auch möglich, dass die Elemente von Teilbereichen einer transparenten Schicht des Substrats gebildet sind und die Elementflächen zumindest einen Teilbereich einer Oberfläche dieser Schicht ausbilden und somit ein in dieser Schicht ausgebildetes Oberflächenrelief definieren.

Als Variationsfunktion werden vorzugsweise symmetrische treppenförmige Funktionen eingesetzt, welche beispielsweise eine Abfolge von Stufenpyramiden beschreiben. Es ist jedoch weiter auch vorteilhaft, als Variationsfunktion eine innerhalb einer Periode asymmetrische Funktion einzusetzen.

Eine dritte Klasse von transmissiven Beugungsstrukturen wird von speziellen durch die Parameter Reliefform, Relieftiefe, Gitterperiode und Azimutwinkel definierten Beugungsgitter nullter Ordnung gebildet. Diese transmissiven Beugungsgitter weisen eine Relieftiefe zwischen 100 nm und 500 nm, insbesondere zwischen 300 nm und 500 nm, bevorzugt zwischen 350 nm und 500 nm und eine Gitterperiode zwischen 250 nm und 700 nm, bevorzugt zwischen 300 nm und 600nm und insbesondere bevorzugt zwischen 350 nm und 600 nm auf. Besonders bevorzugt sind Beugungsgitter mit sinusförmiger Reliefform. Die Reliefstruktur des Beugungsgitters ist hierbei vorzugsweise zwischen einer transparenten Schicht und einer transparenten Wellenleiterschicht, insbesondere HRI-Schicht (HRI = High Refraction Index) abgeformt. Die Dicke der HRI-Schicht beträgt hierbei zwischen 50 nm und 250 nm, vorzugsweise zwischen 130 und 250 nm, insbesondere zwischen 150 und 220 nm. Im Unterschied zu den bekannten reflektiven Beugungsgittern nullter Ordnung, welche deutlich geringere Relieftiefen aufweisen, zeigen die erfindungsgemäßen transmissiven Beugungsgitter nullter Ordnung einen wesentlich stärkeren Farbänderungseffekt in Durchlichtbetrachtung.

Gemäß eines weiteren bevorzugten Ausführungsbeispiels der Erfindung weist das Substrat in dem ersten Bereich ein oder mehrere reflektive Beugungsstrukturen auf, die bei Auflichtbetrachtung ein oder mehrere optische Sicherheitsmerkmale zeigen. Vorzugsweise sind in dem ersten Bereich eine Vielzahl von ersten Teilbereichen vorgesehen, die mit einer der ein oder mehreren transmissiven Beugungsstrukturen belegt sind, und eine Vielzahl von zweiten Teilbereichen vorgesehen, die mit einer der ein oder mehreren reflektiven Beugungsstrukturen belegt sind. Hierdurch ist es möglich, zu erreichen, dass das Sicherheitselement im ersten Bereich sowohl bei Durchlichtbetrachtung als auch bei Auflichtbetrachtung ein Sicherheitsmerkmal zeigt, wobei sich das Sicherheitsmerkmal in Auflichtbetrachtung von dem Sicherheitsmerkmal in Durchlichtbetrachtung vorzugsweise unterscheidet. Vorzugsweise weisen die ersten und zweiten Teilbereiche hierzu jeweils zumindest eine laterale Abmessung von weniger als 300 μm, insbesondere weniger als 150 μm, bevorzugt von weniger als 80 μm auf. Weiter sind zumindest bereichsweise erste und zweite Teilbereiche benachbart zueinander angeordnet, sodass sich im ersten Bereiche in Auflichtbetrachtung eine durch die zweiten Teilbereiche bestimmte zweite optische Information und im Durchlicht eine durch die ersten Teilbereiche bestimmte erste optische Information zeigt. Beispielsweise kann in Auflicht die Denomination einer Banknote und im Durchlicht das Währungszeichen oder Währungssymbol dargestellt sein.

Weiter ist es vorteilhaft, wenn ein erfindungsgemäßes Sicherheitselement neben den oben beschriebenen transmissiven und opaken Bereichen noch weitere Flächenbereiche aufweist, in denen andere, insbesondere bekannte Sicherheitsmerkmale angeordnet sind, die in Reflexion und/oder Transmission erkennbar sind. Beispielsweise können dies diffraktive Strukturen sein, die vollflächig oder nur flächenbereichsweise mit Reflexionsschichten, z.B. Metallschichten und/oder HRI-Schichten belegt sind. Beispielsweise können das refraktiv wirkende Strukturen sein wie z.B. Mikrolinsen oder Mikroprismen. Beispielsweise können das Dünnfilmelemente mit einem Farbwechseleffekt sein. Beispielsweise können das aufgedruckte optisch variable OVI-Effekttinten (OVI = Optically Variable Inks) sein. Beispielweise können das ein oder mehrere Volumenhologrammschichten sein.

Das Sicherheitselement wird vorzugsweise von einer Laminierfolie, einer Transferlage einer Transferfolie, einem Sicherheitsfaden oder einem Label gebildet. Es ist jedoch auch möglich, dass das Sicherheitselement als Sicherheitsdokument oder Wertdokument, beispielsweise als Pass oder ID-Karte ausgebildet ist.

Im Folgenden wird die Erfindung anhand von mehreren Ausführungsbeispielen unter Zuhilfenahme der beiliegenden Zeichnungen beispielhaft erläutert.

Fig. 1 a zeigt eine schematische Draufsicht auf ein Sicherheitsdokument.

Fig. 1b zeigt eine schematische Schnittdarstellung des Sicherheitsdokuments nach Fig. 1a.

Fig. 1c zeigt eine schematische Schnittdarstellung eines Sicherheitselements.

Fig. 2 zeigt eine schematische Schnittdarstellung eines Sicherheitselements.

Fig. 3 zeigt eine schematische Schnittdarstellung eines Sicherheitselements.

Fig. 4a bis Fig. 4g zeigen mehrere Diagramme.

Fig. 5 zeigt eine schematische Schnittdarstellung eines Sicherheitselements.

Fig. 6a bis Fig. 6d zeigen mehrere Diagramme.

Fig. 7a zeigt eine schematische Schnittdarstellung eines Sicherheitselements.

Fig. 7b zeigt eine vergrößerte Darstellung eines Ausschnitts des Sicherheitselements nach Fig. 7a.

Fig. 8a zeigt eine schematische Schnittdarstellung eines Sicherheitselements.

Fig. 8b zeigt eine vergrößerte Darstellung eines Ausschnitts des Sicherheitselements nach Fig. 8a.

Fig. 9a zeigt eine schematische Darstellung zur Verdeutlichung des sich in einem transparenten Bereich eines Sicherheitselements bei einer ersten Betrachtungssituation ergebenden optischen Erscheinungsbilds.

Fig. 9b zeigt eine schematische Darstellung zur Verdeutlichung des sich bei dem Sicherheitselement nach Fig. 9a bei einer zweiten Betrachtungssituation ergebenden optischen Erscheinungsbilds.

Fig. 10 zeigt eine schematische Schnittdarstellung einer Vorrichtung zur Überprüfung des Sicherheitselements nach Fig. 9a.

Fig. 11a zeigt eine schematische Draufsicht auf einen transparenten Bereich eines Sicherheitselements.

Fig. 11b zeigt eine schematische Draufsicht auf einen transparenten Bereich eines Sicherheitselements.

Fig. 11c zeigt eine schematische Draufsicht auf einen transparenten Bereich eines Sicherheitselements.

Fig. 12a zeigt eine schematische Draufsicht auf einen transparenten Bereichs eines Sicherheitselements.

Fig. 12b zeigt eine schematische Darstellung einer ersten Betrachtungssituation des Sicherheitselements nach Fig. 12a.

Fig. 12c zeigt eine schematische Darstellung einer zweiten Betrachtungssituation des Sicherheitselements nach Fig. 12a.

Fig. 13a zeigt eine schematische Draufsicht auf ein Sicherheitselement bei einer ersten Betrachtungssituation.

Fig. 13b zeigt eine schematische Draufsicht auf das Sicherheitselement nach Fig. 13a bei einer zweiten Betrachtungssituation.

Fig. 14a zeigt eine schematische Draufsicht auf einen transparenten Bereich eines Sicherheitselements.

Fig. 14b zeigt eine schematische Draufsicht auf einen Motivbereich des Sicherheitselements nach Fig. 14a.

Fig. 14c zeigt eine schematische Draufsicht auf zwei sich überlappende Motivbereiche des Sicherheitselements nach Fig. 14a.

Fig. 15a bis Fig. 15c zeigen schematische Darstellungen zur Verdeutlichung der optischen Wirkung des Sicherheitselements nach Fig. 14a bei verschiedenen Betrachtungssituationen.

Fig. 16a und Fig. 16b zeigen schematische Darstellungen von Betrachtungssituationen eines Sicherheitselements.

Fig. 17a bis Fig. 17c zeigen schematische Darstellungen von Betrachtungssituationen eines Sicherheitselements.

Fig. 18a und Fig. 18b zeigen schematische Darstellungen von Betrachtungssituationen eines Sicherheitselements.

Fig. 19a bis Fig. 19d zeigen schematische Darstellungen von Betrachtungssituationen eines Sicherheitselements.

Fig. 20 zeigt eine schematische Draufsicht auf einen Bereich eines Sicherheitselements.

Fig. 21 zeigt eine schematische Schnittdarstellung einer Vorrichtung zur Überprüfung des Sicherheitselements nach Fig. 20.

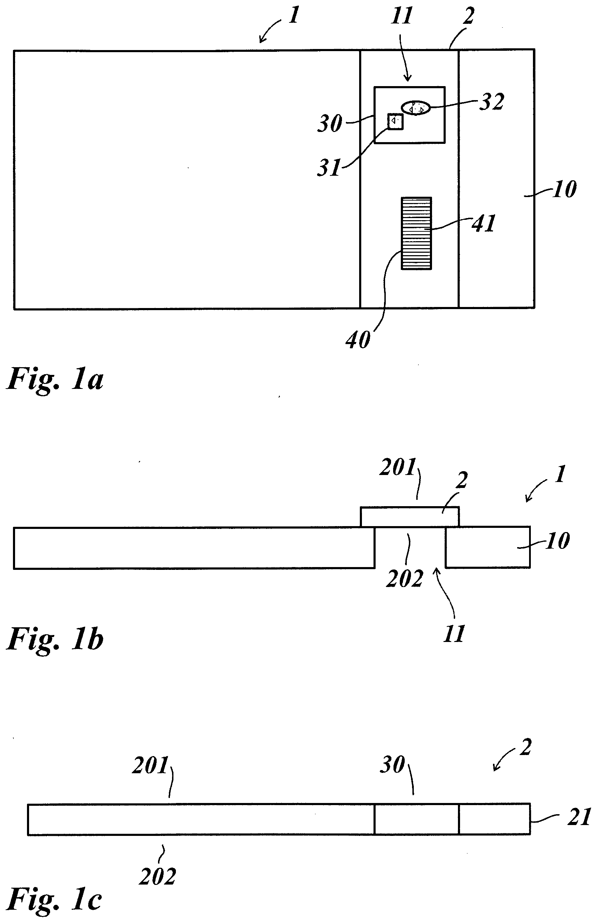

Fig. 1a und Fig. 1b zeigen ein Sicherheitsdokument 1 mit einem Trägersubstrat 10 und einem auf dem Trägersubstrat 10 applizierten Sicherheitselement 2.

Bei dem Sicherheitsdokument 1 handelt es sich vorzugsweise um eine Banknote, ein ID-Dokument wie beispielsweise einen Reisepass, ein Aktienzertifikat, ein Sicherheits-Label zur Warensicherung oder ein Software-Zertifikat.

Das Trägersubstrat 10 besteht vorzugsweise aus einem Papiersubstrat, weiter bevorzugt aus einem Sicherheitspapier. Es ist jedoch auch möglich, dass das Trägersubstrat 10 aus einem Kunststoffmaterial besteht oder es sich hier um ein mehrschichtiges Substrat handelt, welches ein oder mehrere Kunststoff- und/oder Papierschichten umfasst. Weiter ist es möglich, dass das Trägersubstrat 10 mit ein oder mehreren Druckschichten, beispielsweise einem Sicherheitsaufdruck, oder Sicherheitselementen versehen ist, beispielsweise einem Wasserzeichen, einem Sicherheitsfaden oder einem Aufdruck bestehend aus einem optisch variablen Druckstoff.

Das Trägersubstrat 10 weist einen transparenten Bereich 11 auf. Der transparente Bereich 11 wird vorzugsweise von einer das Trägersubstrat 10 durchbrechenden Ausnehmung gebildet, welche beispielsweise mithilfe eines Wasserzeichens oder eines Stanzprozesses in das Trägersubstrat 10 eingebracht worden ist. Es ist weiter auch möglich, dass in dem transparenten Bereich 11 des Trägersubstrats 10 ein oder mehrere Schichten des Trägersubstrats vorgesehen sind, welche jedoch transparent ausgebildet sind. So weist das Trägersubstrat 10 beispielsweise eine oder mehrere transparente, aus Kunststoff bestehende vollflächige Trägerschichten auf, welche außerhalb des transparenten Bereichs 11 mit einer opaken Deckschicht versehen ist. Außerhalb des transparenten Bereichs 11 ist das Trägersubstrat 10 vorzugsweise opak oder transluzent ausgebildet. Das Trägersubstrat 10 kann dabei vergleichsweise dünn, z.B. 50 μm bis 200 μm dick, und flexibel sein, z.B. für eine Banknote oder auch vergleichsweise dick, z.B. 250 μm bis 2000 μm dick, und stabil, z.B. für eine ID-Karte.

Auf eine Seite des Trägersubstrats 10 ist das Sicherheitselement 2 derart appliziert, dass ein transparenter Bereich 30 des Sicherheitselements 2 den transparenten Bereich 11 des Trägersubstrats 10 zumindest bereichsweise überdeckt.

Bei dem Sicherheitselement 2 handelt es sich vorzugsweise um die Transferlage einer Transferfolie oder um eine Laminierfolie, welche mittels einer Kleberschicht auf einer Seite des Trägersubstrats 10 appliziert ist. Das Sicherheitselement 2 hat in dem Ausführungsbeispiel nach Fig. 1 a und Fig. 1b eine streifenförmige Formgebung und erstreckt sich über die gesamte Breite des Sicherheitsdokuments 1 zwischen zwei gegenüberliegenden Kanten des Trägersubstrats 10. Es ist jedoch auch möglich, dass das Sicherheitselement 2 eine andere Formgebung besitzt, beispielsweise eine Patch-förmige Formgebung besitzt.

Weiter ist es auch möglich, dass das Sicherheitselement 2 nicht auf einer Seite des Trägersubstrats 10 appliziert wird, sondern in das Trägersubstrat 10 eingebettet wird, beispielsweise zwischen zwei Schichten des Trägersubstrats 10 eingebettet ist.

Das Sicherheitselement 2 weist eine Oberseite 201 und eine Unterseite 202 auf.

Das Sicherheitselement 2 besteht vorzugsweise aus einem flexiblen, mehrschichtigen Folienelement. Das Sicherheitselement 2 weist hierbei einen im Durchlicht transparenten Bereich 30 auf. Der Bereich 30 kann, wie dies beispielsweise in Fig. 1 a gezeigt ist, sich hierbei lediglich über einen Teilbereich des Sicherheitselements 2 erstrecken. Es ist jedoch auch möglich, dass der transparente Bereich 30 sich über das gesamte Sicherheitselement 2 erstreckt, dass heißt das gesamte Sicherheitselement 2 im Durchlicht transparent ist.

Unter im Durchlicht transparenten Bereich wird hierbei ein Bereich des Sicherheitselements 2 verstanden, bei dem bei Durchlichtbetrachtung unter zumindest einem Kippwinkel die Transmissivität für zumindest einen Wellenlängenbereich von mindestens 30 nm aus dem Wellenlängenbereich des für das menschlichen Auges sichtbaren Lichts größer als 20%, weiter bevorzugt größer als 50 % und weiter bevorzugt größer als 70 % ist. Bevorzugt ist zumindest bei einem Kippwinkel im Wellenlängenbereich von 460 nm bis 660 nm die Transmissivität mehr als 50% und weiter bevorzugt in mindestens der Hälfte des Wellenlängenbereichs von 460 nm bis 660 nm mehr als 80%.

Weiter weist der transparente Bereich 30 vorzugsweise zumindest einen Teilbereich auf, welcher bei Durchlichtbetrachtung unter zumindest einem Kippwinkel transparent und klar ist, sodass hinter dem Sicherheitselement 2, d.h. auf der dem Betrachter abgewandten Seite des Sicherheitselements 2 angeordnete optische Informationen durch den transparenten Bereich 30 hindurch für den menschlichen Betrachter sichtbar sind. Unter klar wird eine Streuung und/oder Absorption von weniger als 40%, weiter bevorzugt von weniger als 20% verstanden.

In dem transparenten Bereich 30 weist das Sicherheitselement 2 ein oder mehrere transmissive Beugungsstrukturen auf, die bei Durchlichtbetrachtung ein oder mehrere optische Sicherheitsmerkmale zeigen. So sind beispielsweise derartige Beugungsstrukturen in Teilbereichen 31 und 32 vorgesehen.

Vorzugsweise weist das Sicherheitselement 2 weiter noch zumindest einen opaken Bereich 40 auf. Vorzugsweise sind in dem opaken Bereich 40 des Sicherheitselements 2 hierbei ein oder mehrere in Reflexion wirkende Beugungsstrukturen 41 vorgesehen.

Weiter ist es auch möglich, dass das Sicherheitselement - wie in Fig. 1c gezeigt - bereits als solches ein Sicherheitsdokument 1, beispielsweise ein ID-Dokument, ein Zahlungsmittel, ein Etikett zur Warensicherung, ein Sicherheitslabel oder ähnliches, ausbildet. So zeigt Fig. 1c beispielsweise die Schnittdarstellung einer ID-Karte mit einem vorzugsweise mehrschichtigen Substrat 21 um den im Durchlicht transparenten Bereich 30. Das Substrat 21 weist in dem transparenten Bereich 30 ein oder mehrere transmissive Beugungsstrukturen auf, die bei Durchlichtbetrachtung, d. h. bei Positionierung einer gerichtetes Licht ausstrahlenden Lichtquelle auf der Rückseite 202 des Sicherheitselement bei Betrachtung von der Vorderseite 201, ein oder mehrere optische Sicherheitsmerkmale zeigen, wie dies auch im Folgenden noch detailliert beschrieben wird. Der transparente Bereich 30 und das Substrat 21 kann von weiteren transparenten, klaren Schichten ein- oder beidseitig vollflächig bedeckt sein. Das Substrat 21 und das Sicherheitsdokument können identisch sein, d.h. die transmissiven Beugungsstrukturen können direkt in die Oberfläche des Sicherheitsdokuments, beispielsweise eine Polymerbanknote oder eine ID-Karte aus Polykarbonat (PC), repliziert werden.

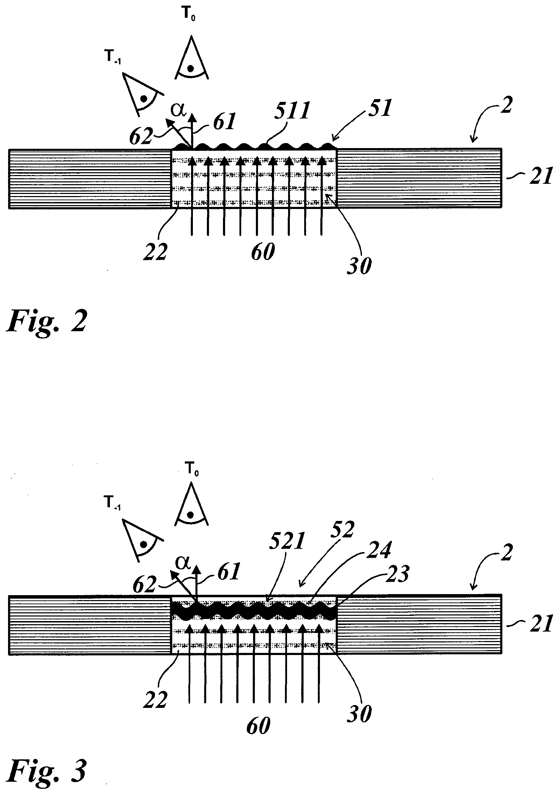

Fig. 2 zeigt das Sicherheitselement 2 mit dem Substrat 21. Das Substrat 21 weist in dem Bereich 30 eine oder mehrere transparente Schichten 22 sowie eine transmissive Beugungsstruktur 51 auf. Die transmissive Beugungsstruktur 51 wird von einer in einer Oberfläche des Substrats 21 abgeformten Reliefstruktur 511 gebildet. Die Reliefstruktur 511 ist hierbei insbesondere in die dem Betrachter zugewandte Oberfläche des Sicherheitselements 2 abgeformt. Die Reliefstrukturen 511 unterscheiden sich deutlich von diffraktiven Strukturen, welche für Betrachtung in Reflexion verwendet werden, wie im Folgenden beschrieben.

Die Reliefform der Reliefstruktur 511 kann sinusförmig, rechteckig, symmetrisch oder asymmetrisch, dreieckig oder noch komplexer sein. Die Beugung beruht auf dem Brechungsindexunterschied zwischen Luft (n = 1) und dem Material der transparenten Schicht 22, d. h. etwa n = 1,5 bei Wahl eines polymeren Materials. Die Schicht 22 besteht so beispielsweise aus einem thermoplastischen oder UVhärtbaren transparenten Kunststoffmaterial, in dessen Oberfläche mittels eines Replizierwerkzeuges die Reliefstruktur 511 unter Einsatz von Hitze und Druck abgeformt wird, bzw. abgeformt und UVgehärtet wird.

In einer bevorzugten, hier nicht gezeigten Ausführungsform wird das so gebildete Oberflächengitter weiter noch zusätzlich mit einer porösen, luftgefüllten Schicht überzogen. Diese Schicht weist einen Brechungsindex nahe 1,0 auf. Damit diese poröse Schicht transparent ist, müssen die Poren und/oder Aggregate, welche die Poren bilden, kleiner als die Wellenlänge des sichtbaren Lichtes sein. Bevorzugt besitzen solche porösen Schichten einen Brechungsindex kleiner als 1,2. Die Schichtdicke der porösen Schicht wird bevorzugt im Bereich von 2 μm bis 50 μm, insbesondere zwischen 2 μm und 20 μm gewählt.

Durch diese poröse Schicht wird der Vorteil erzielt, dass die Reliefstruktur 511 geschützt ist, ohne die Beugungseigenschaften dieser Schicht zu zerstören.

Weiter ist es auch möglich, diese poröse Schicht mit ein oder mehreren weiteren polymeren Schichten, insbesondere Schutzschichten zu beschichten.

Bei Durchlichtbetrachtung fällt nun Licht 60 auf die Rückseite des Sicherheitselements 21, wird durch den transparenten Bereich 30 mit der Beugungsstruktur 51 transmittiert und hierbei wie im Folgenden beschrieben verändert, und fällt sodann auf das Auge des auf der Vorderseite des Sicherheitselements 2 positionierten Betrachters.

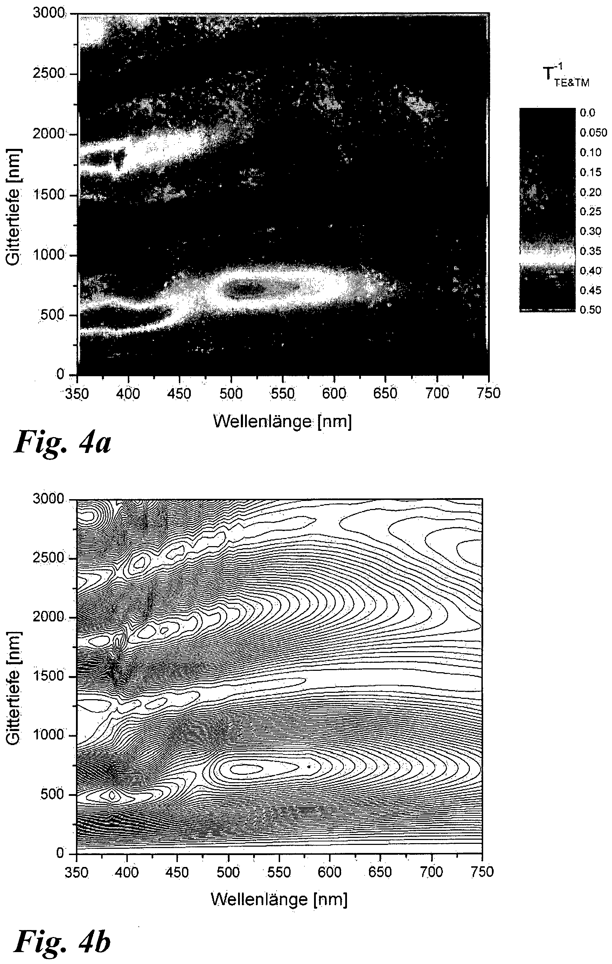

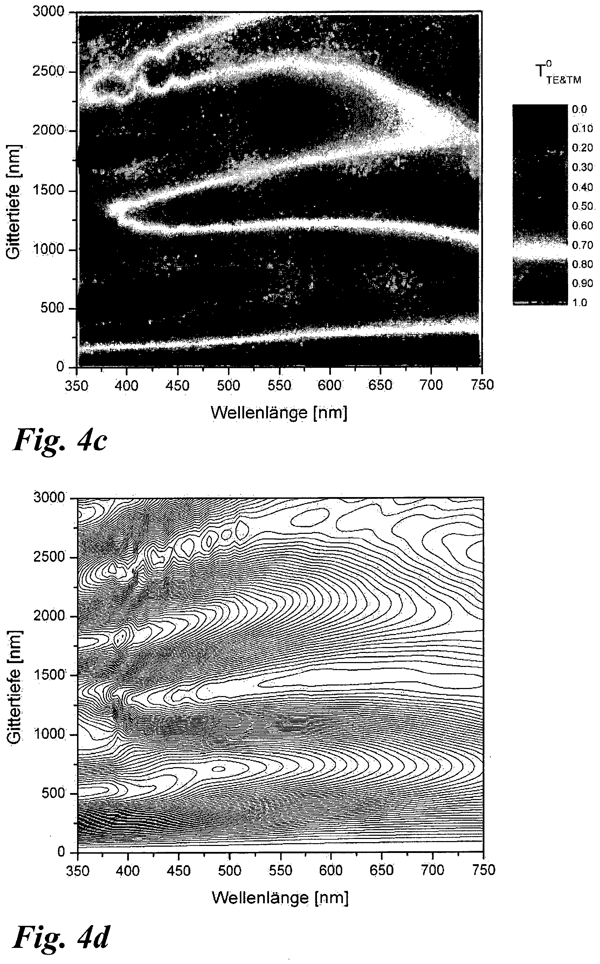

Die Diffraktionseffizienz in der nullten 61 ($T_0$) sowie ersten Ordnung 62 ($T_{+/-1}$) hängt unter anderem sehr stark von der Relieftiefe t der Reliefstruktur 511 ab. Die Figuren Fig. 4a und Fig. 4b zeigen die Diffraktionseffizienz in der +/-1. Ordnung als Funktion der Wellenlänge und der Relieftiefe. Bei der Reliefstruktur 511 handelt es sich bei diesem Beispiel um eine Reliefstruktur mit einer Gitterperiode von 770 nm, und einer sinusförmigen Reliefform. Weiter zeigt Fig. 4a und Fig. 4b die über die TE- und TM-Polarisation gemittelte Diffraktionseffizienz der ersten Ordnung. Der Beleuchtungswinkel ist senkrecht zu der von der Rückseite des Sicherheitselements 2 aufgespannten Ebene gewählt, wie dies in Fig. 2 entsprechend für den Lichteinfall des Lichts 60 dargestellt ist. Fig. 4c und Fig. 4d zeigen entsprechende Diagramme für die Diffraktion in der nullten Ordnung.

Gemäß einer bevorzugten Ausführungsform der Erfindung wird nun die Reliefstruktur 51 so ausgelegt, dass die Reliefstruktur 511 neben einer möglichst starken Diffraktionseffizienz in der ersten Ordnung im Durchlicht eine möglichst gleichmäßige, d. h. farbneutrale Transmission in der nullten Ordnung aufweist und sich dort das Farbspektrum des transmittierten Lichts möglichst wenig ändert. Bevorzugt ist die Transmission in der nullten Ordnung hierbei für den sichtbaren Spektralbereich größer als 30%, insbesondere größer als 50% gewählt. Als sichtbarer Spektralbereich wird hierbei vorzugsweise der Bereich zwischen 460 nm und 660 nm gewählt.

Aus den durchgeführten Untersuchungen ergibt sich so, dass die Gittertiefe größer als 200 nm, insbesondere größer als 300 nm und weiter bevorzugt größer als 400 nm zu wählen ist.

Zur Erzielung des oben beschriebenen Effekts, bei dem das in der Strahlrichtung senkrecht zu der von der Rückseite des Sicherheitselements 2 aufgespannten Ebene auf die Rückseite des Sicherheitselements 2 einfallende Licht weitgehend in seinem Farbspektrum unverändert in Richtung der Strahlrichtung durch das Substrat transmittiert wird, beträgt die Relieftiefe der Reliefstruktur 511 bevorzugt zwischen 900 nm bis 1700 nm, weiter bevorzugt zwischen 900 nm und 1500 nm und weiter bevorzugt zwischen 900 nm und 1200 nm.

Ein wichtiger Reliefparameter der Reliefstruktur 511 ist die Gitterperiode. Wie bereits von Reflexionsgittern bekannt, verschiebt sich die gebeugt Wellenlänge mit zunehmender Gitterperiode zu größeren Wellenlängen. Dies gilt auch für transmissive Beugungsstrukturen und wird durch die sogenannte Gittergleichung (I) beschrieben:

$$\sin \Theta \pm \sin \beta = \frac{m\lambda}{\Lambda}$$

Hierbei steht m für die Diffraktionsordnung, $\lambda$ für die Wellenlänge, A für die Gitterperiode, $\Theta$ für den Einfallswinkel und $\beta$ für den Diffraktionswinkel. Es hat sich gezeigt, dass, wenn die Relieftiefe in dem zuvor definierten Bereich liegt, ein breiter Bereich an Gitterperioden verwendet werden kann, um hierdurch einen Kippwinkelbereich einzustellen, bei dem sich ein Farbänderungseffekt als optisches Sicherheitsmerkmal zeigt.

Bevorzugt liegt die Gitterperiode der Reliefstruktur 511 hierbei im Bereich von 500 nm bis 1500 nm, weiter bevorzugt zwischen 600 nm und 1200 nm.

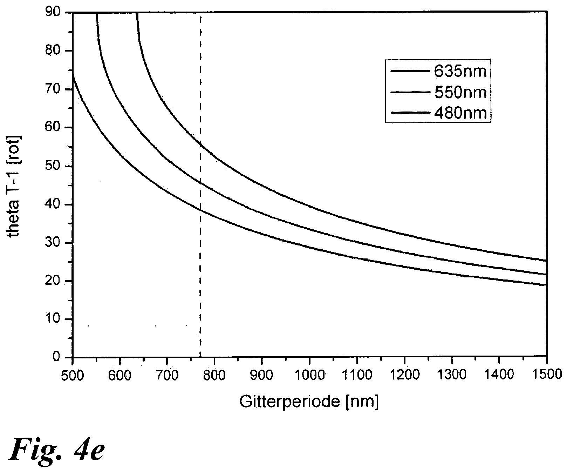

Abbildung 4e verdeutlicht hierbei die Abhängigkeit zwischen diesem Kippwinkel bzw. Betrachtungswinkel $\alpha$ und der Gitterperiode für die beispielhaften Wellenlängen 480 nm (blau), 550 nm (grün) und 635 nm (rot). Das Diagramm wurde hierbei für eine Reliefstruktur mit einem sinusförmigen Reliefprofil, einer Gitterperiode zwischen 500 nm und 1500 nm und der Betrachtungssituation gemäß Fig. 2 ermittelt.

Durch entsprechende Wahl der Gitterperiode kann so die sich beim Verkippen bzw. Änderung des Betrachtungswinkels in dem mit der Reliefstruktur 511 belegten Teilbereich des transparenten Bereichs 30 zeigende Farbe sowie der Kippwinkelbereich bzw. Betrachtungswinkelbereich eingestellt werden, bei dem sich dieser Effekt zeigt.

Fig. 3 zeigt ein weiteres Ausführungsbeispiel des Sicherheitselements 2. Das Sicherheitselement 2 besteht aus einem vorzugsweise mehrschichtigen Substrat 21, welches im Bereich 30 eine transmissive Beugungsstruktur 52 aufweist. In dem Bereich 30 weist das Substrat 21 in dem Ausführungsbeispiel nach Fig. 3 hierzu drei transparente Schichten 22, 23 und 24 auf, wobei zwischen zwei dieser Schichten eine Reliefstruktur 521 als transmissive Beugungsstruktur 52 abgeformt ist.

Bei den Schichten 22 und 24 handelt es sich vorzugsweise um transparente, polymere Schichten, beispielsweise transparente Schichten, welche einen Brechungsindex von etwa 1,5 aufweisen. Bei der Schicht 23 handelt es sich um eine diffraktionsverstärkende Schicht. Bevorzugte Materialien und Parameter der diffraktionsverstärkenden Schicht sind:

     Aluminium, Kupfer, Gold, Titan, Silber oder Chrom bevorzugt mit einer Schichtdicke im Bereich von 2 nm bis 50 nm, d. h. eine dünne, transparente metallische Schicht.

Hochbrechende transparente HRI-Materialien (HRI = High Refractive Index) wie $TiO_2$, ZnS, $ZrO_2$, oder $Si_3N_4$ bevorzugt mit einer Schichtdicke im Bereich von 50 nm bis 250 nm. Alternative hochbrechende HRI-Materialien sind hybride Materialien bestehend aus hochbrechenden Nanopartikeln, beispielsweise $TiO_2$, einge-

bettet in eine Polymermatrix, beispielsweise in Polyvinylalkohol PVA.

Die Reliefstruktur 521 weist beispielsweise eine sinusförmige, rechteckige, symmetrische oder asymmetrische, dreieckige oder noch komplexere Reliefform auf.

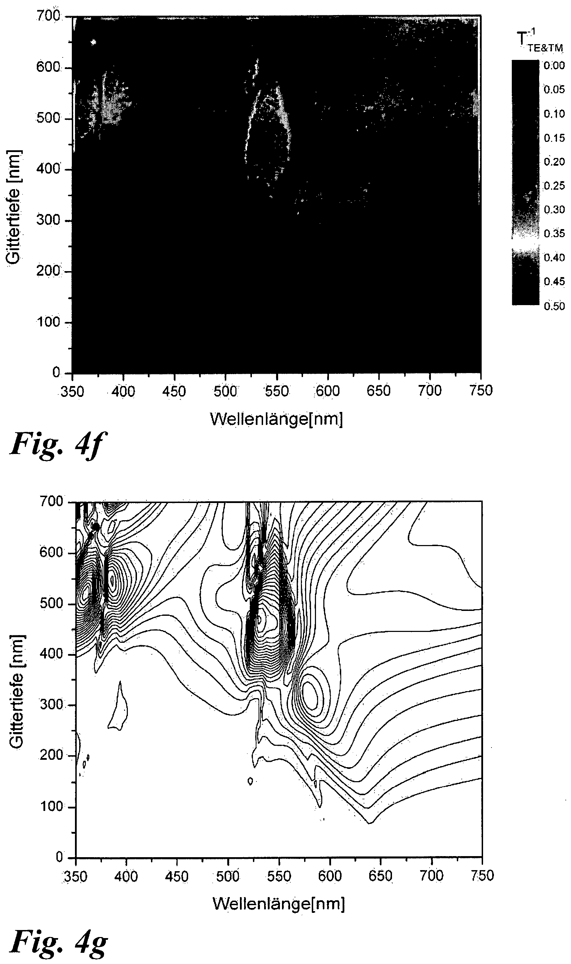

Es hat sich hierbei gezeigt, dass zur Bereitstellung einer transmissiven Beugungsstruktur im obigen Sinne nicht nur die Reliefparameter Relieftiefe und Gitterperiode eine Rolle spielen, sondern auch die Schichtdicke sowie das Material der diffraktionsverstärkenden Schicht. Fig. 4f und Fig. 4g verdeutlichen hierbei die ermittelte Abhängigkeit zwischen Diffraktionseffizienz in der ersten Ordnung ($T_{+/-1}$) und der Relieftiefe als Funktion der Wellenlänge und der Relieftiefe. Die Gitterperiode beträgt bei diesem Beispiel 650 nm und die Reliefform ist sinusförmig. Die diffraktionsverstärkende Schicht besteht bei diesem Beispiel aus ZnS eingebettet in ein Polymer mit einer Schichtdicke der ZnS-Schicht von 120 nm. Weiter ist die über die TE und TM-Polarisation gemittelte Diffraktionseffizienz gezeigt. Dies illustriert den Effekt derartiger Strukturen bei normaler, d.h. unpolarisierter, Beleuchtung, z.B. in Sonnenlicht oder unter Leuchtstofflampen oder Glühlampen.

Hierauf basierende Untersuchungen haben gezeigt, dass so zur Bereitstellung von transmissiven Beugungsstrukturen in obigem Sinne bevorzugt eine Gittertiefe von mehr als 200 nm und besonders bevorzugt von mehr als 400 nm zu wählen ist. Gleichzeitig wird die Relieftiefe kleiner als 700 nm und insbesondere kleiner 600 nm gewählt.

Bei einer Reliefstruktur 521, die für die Farbe grün (Diffraktionspeak zwischen 500 nm und 550 nm) optimiert ist, liegt die Relieftiefe beispielsweise bevorzugt im Bereich zwischen 400 nm und 550 nm.

Um eine möglichst spektralbegrenzte signifikante Diffraktion zu erzielen, hat sich weiter als vorteilhaft erwiesen, als diffraktionsverstärkende Schicht 23 eine HRI-Schicht mit einer Schichtdicke zwischen 50 nm bis 300 nm, bevorzugt zwischen 75 nm und 150 nm einzusetzen.

Weiter hat sich gezeigt, dass die Diffraktionseffizienz in der nullten Ordnung im Schichtdickenbereich von 75 nm bis 125 nm besonders gleichmäßig ist. Hierdurch wird ein besonders farbneutrales Erscheinungsbild bei Betrachtung in der nullten Ordnung erzielt.

Weiter haben Untersuchungen gezeigt, dass die Gitterperiode der Reliefstrukturen 521 bevorzugt wie folgt zu wählen ist:

Für einen Farbänderungseffekt in Richtung grün ist die Gitterperiode bevorzugt im Bereich von 620 nm bis 690 nm zu wählen, in Richtung rot ist die Gitterperiode im Bereich von 735 bis 800 nm und in Richtung blau im Bereich von 530 nm bis 600 nm zu wählen.

Durch die entsprechende Wahl der Reliefparameter der Reliefstruktur 521 in den oben beschriebenen Wertebereichen lässt sich so eine entsprechende Veränderung der Farbe des mit diesen Strukturen belegten Teilbereichs des Bereichs 30 beim Verkippen des Sicherheitselements 2 erzielen. Weiter können durch entsprechende Kombination von Reliefstrukturen, die gemäß den oben angeführten Parametern auf rot, grün, blau optimiert sind, mittels additiver Farbmischungen auch Echtfarbenbilder realisiert werden, wie dies weiter unten noch detailliert erläutert wird. Bevorzugt sind die Reliefstrukturen so gewählt, dass die für einen definierten Betrachtungswinkel gewünschten Farben der Teilbereiche bei jeweils gleicher Schichtdicke der diffraktionsverstärkenden Schicht erzielt werden. Dies erleichtert die Herstellung derartiger Sicherheitsmerkmale.

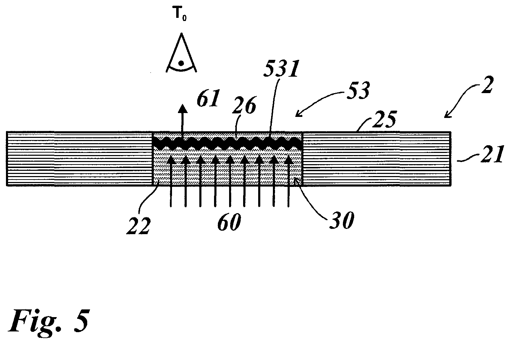

Fig. 5 zeigt ein weiteres Ausführungsbeispiel des Sicherheitselements 2.

In dem Bereich 30 weist das Substrat 21 eine transmissive Beugungsstruktur 53 auf. In dem Bereich 30 weist das Substrat 21 hierzu eine transparente Schicht 22 und eine Wellenleiterschicht 25 auf, wobei zwischen der transparente Schicht 22 und der Wellenleiterschicht 25 eine Reliefstruktur 531 abgeformt ist. In dem Ausführungsbeispiel nach Fig. 5 weist das Substrat 21 so in dem Bereich 30 zwei transparente Polymerschichten 22 und 26 und eine zwischen diesen angeordnete Wellenleiterschicht 25 auf, die vorzugsweise von einer HRI-Schicht gebildet ist. Als Material für die HRI-Schicht wird bevorzugt $TiO_2$, ZnS, $ZrO_2$, oder $Si_3N_4$ verwendet. Alternative hochbrechende HRI-Materialien sind hybride Materialien bestehend aus hochbrechenden Nanopartikeln, beispielsweise $TiO_2$, eingebettet in eine Polymermatrix, beispielsweise in Polyvinylalkohol PVA. Die Schichtdicke der HRI-Schicht beträgt vorzugsweise zwischen 50 nm und 250 nm.

Die Reliefstruktur 531 weist eine sinusförmige, rechteckige, symmetrische, asymmetrische, dreieckige oder noch komplexere Reliefform auf. Bei der Reliefstruktur 531 handelt es sich um eine spezielle Beugungsstruktur nullter Ordnung (Gitterperiode kleiner als Zielwellenlänge). Die Gitterperiode der Reliefstruktur 531 ist hierbei bevorzugt zwischen 250 nm und 700 nm, weiter bevorzugt zwischen 300 nm und 600 nm gewählt.

Untersuchungen haben gezeigt, dass zur Erzielung der Wirkung einer transmissiven Beugungsstruktur nullter Ordnung nicht nur die Reliefparameter Relieftiefe und Gitterperiode, sondern auch die Schichtdicke der hochbrechenden Wellenleiterschicht (HRI) entsprechend gewählt werden muss, um den gewünschten Effekt zu erzielen. Dies gilt insbesondere für Beugungsstrukturen nullter Ordnung, welche bei senkrechter Betrachtung farbneutral erscheinen sollen.

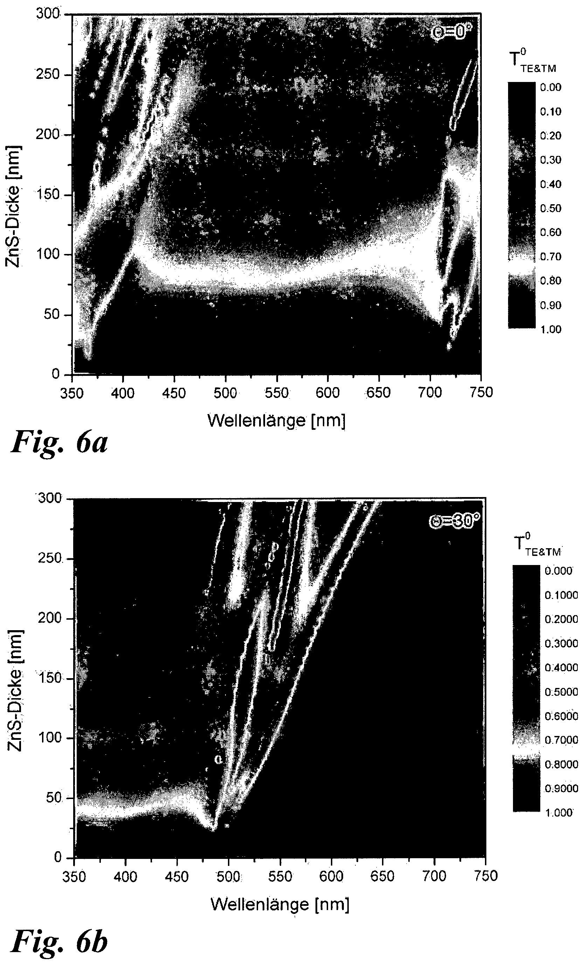

Fig. 6a und Fig. 6b verdeutlichen hierzu die Abhängigkeit der Transmission der Beugungsstruktur 531 bei senkrechter (0°) bzw. gekippter (30°) Beleuchtung bzw. Betrachtung in Abhängigkeit von der Wellenlänge und der Schichtdicke der hochbrechenden Wellenleiterschicht, wobei hier eine Reliefstruktur mit einem sinusförmigen Reliefform, einer Gitterperiode von 450 nm und einer Gittertiefe von 380 nm gewählt ist. Als Material für die hochbrechende Wellenleiterschicht wurde beispielhaft ZnS gewählt. Fig. 6a zeigt hierbei die Transmission bei senkrechter und Fig. 6b bei gekippter Betrachtung.

Transmission in nullter Ordnung bedeutet, dass sich das Licht auf einer geraden Linie von der Lichtquelle zum Auge des Betrachters bewegt - wenn Refraktion in dem Sicherheitsdokument bzw. Sicherheitselement vernachlässigt wird.

Aus derartigen Untersuchungen hat sich ergeben, dass bei gekippter Betrachtung ein Transmissionsminimum mit T < 20% erst ab einer Dicke der hochbrechenden transparenten Wellenleiterschicht von mehr als 130 nm erzielt werden kann. Dieses Transmissionsminimum ist essentiell, um einen für das menschliche Auge deutlich wahrnehmbaren Farbeindruck zu erzeugen. Weiter haben diese Untersuchungen gezeigt, dass die Transmission bei senkrechter Beleuchtung und Betrachtung gleichmäßig und selbst bis zu einer Dicke der hochbrechenden, transparenten Wellenleiterschicht von 250 nm deutlich über 25% ist. Dies ermöglicht ein farblich unverfälschtes, d. h. farbneutrales Erscheinungsbild in Transmission bei diesem Winkel. Die Untersuchungen haben so ergeben, dass die Dicke der hochbrechenden transparenten Wellenleiterschicht vorzugsweise im Bereich von 70 nm bis 250 nm, weiter bevorzugt im Bereich von 130 nm bis 220 nm zu wählen ist.

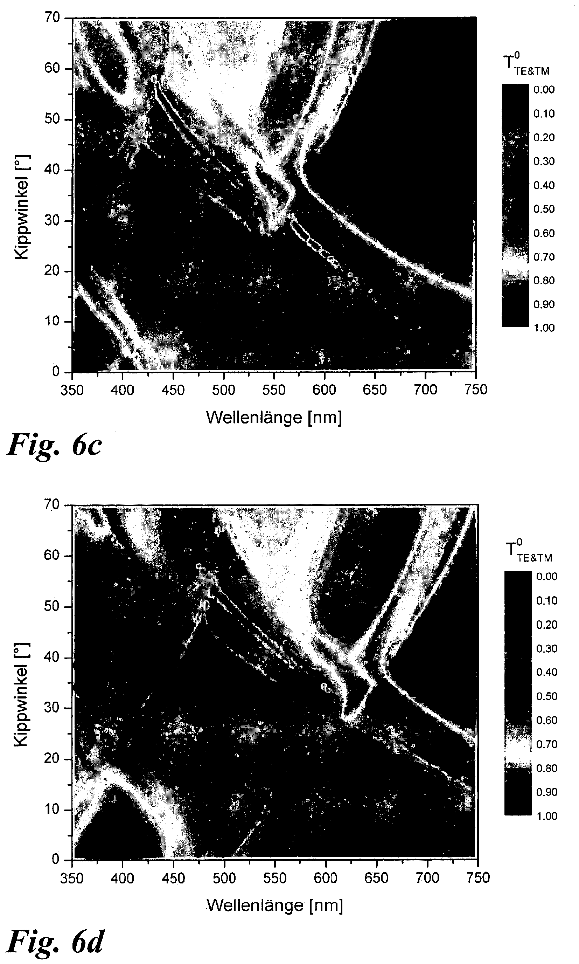

Weiter haben Untersuchungen gezeigt, dass das spektrale Verhalten des Beugungsgitters 531 auch durch die Gittertiefe maßgeblich beeinflusst wird. So zeigt Fig. 6c die Abhängigkeit der Transmission des Beugungsgitters 531 bei Variation des Kippwinkels bei einer Relieftiefe von 365 nm und Gitterperiode von 475 nm und Fig. 6d bei einer Relieftiefe von 430 nm und einer Gitterperiode von 550 nm, wobei es sich bei der Reliefform um ein Sinusprofil handelt und die hochbrechende Wellenleiterschicht eine Schichtdicke von 180 nm aufweist.

Hierauf aufbauende Untersuchungen haben gezeigt, dass bei gekippter Betrachtung ein Transmissionsminimum mit T < 20% erst ab einer Relieftiefe von über 300 nm erzielbar ist, wobei die senkrechte Transmission selbst bis zu einer Gittertiefe von 550 nm deutlich über 25% liegt. Vorzugsweise wird so die Relieftiefe der Reliefstruktur 531 im Bereich von 300 nm bis 550 nm, weiter bevorzugt im Bereich von 350 bis 500 nm gewählt.

Bei Wahl dieser Parameter und Ausrichtung der Gitterlinien quer zur Blickrichtung ergibt sich so beispielsweise ein Farbeffekt von farbneutral bei senkrechter Betrachtung zu orange bei einem Kippwinkel von 30° und wieder farbneutral bei einem Kippwinkel von 60°, beispielsweise bei Wahl einer Relieftiefe von 365 nm, einer Schichtdicke der transparenten Wellenleiterschicht 180 nm und einer Gitterperiode von 475 nm. Weiter zeigt sich beispielsweise ein Farbeffekt von farbneutral bis leicht bläulich bei senkrechter Betrachtung zu rot bei einem Kippwinkel von ca. 30° und wieder nahezu farbneutral bis leicht rötlich bei einem Kippwinkel von 60°, bei Ausrichtung der Gitterlinien quer zur Blickrichtung und Wahl einer Relieftiefe von 430 nm, einer Gitterperiode von 550 nm und einer Schichtdicke der transparenten Wellenleiterschicht von 180 nm.

Die Gitterperiode der Reliefstruktur 531 wird vorzugsweise im Bereich von 250 nm bis 700 nm, weiter bevorzugt im Bereich von 300 nm bis 600 nm gewählt. Durch die Wahl der Periode lässt sich insbesondere die sich beim Verkippen zeigende Farbe einstellen.

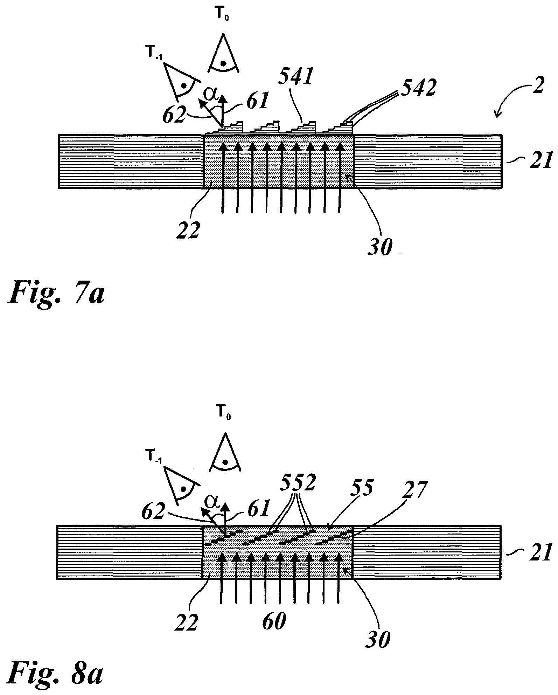

Weiter haben Untersuchungen gezeigt, dass sich die Effekte nicht nur für Lineargitter sondern auch für Kreuzgitter, hexagonale Gitter oder noch komplexere Gitterformen der Reliefstrukturen erzielen lassen. Auch hier ist die entsprechende Wahl der Gittertiefe wie oben beschrieben ein entscheidender Faktor zur Erzielung der entsprechenden Effekte. Fig. 7a bis Fig. 8b verdeutlichen nun eine Ausbildung des Sicherheitselements 2 gemäß einer dritten Klasse von transmissiven Beugungsstrukturen.

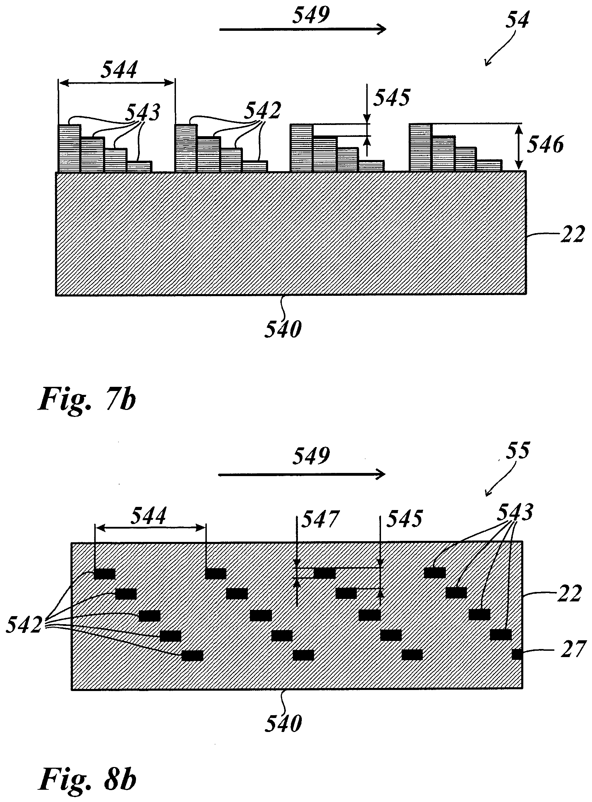

Fig. 7a zeigt das Sicherheitselement 2 mit dem Substrat 21, welches in dem Bereich 30 eine transmissive Beugungsstruktur 54 aufweist. Die Beugungsstruktur 54 besteht aus einer Vielzahl von Elementen 542, die jeweils zumindest eine im Wesentlichen parallel zu einer Grundebene angeordnete Elementfläche 540 aufweisen. Dies ist auch in Fig. 7b gezeigt, welche eine vergrößerte Darstellung eines Teilbereichs des Bereichs 30 zeigt. Die Grundebene 540 wird hierbei vorzugsweise von der Rückseite des Substrats 21 bzw. des Sicherheitselements 2 gebildet. Es ist jedoch auch möglich, dass die Grundebene 540 zu der von der Rückseite des Substrats aufgespannten Ebene eine Neigung besitzt und leicht gegen diese Ebene verkippt ist.

Die Elemente 542 sind im Bezug auf zumindest eine parallel zur Grundebene verlaufende erste Richtung 549 gegeneinander versetzt angeordnet und die Elementflächen 543 benachbarter Elemente 542 in einer senkrecht zur Grundebene stehenden Richtung gemäß einer von der zumindest einen ersten Richtung 549 abhängenden Variationsfunktion beabstandet mit einem Abstand 545 oder einem Vielfachen des Abstands 545. Die Variationsfunktion ist hierbei eine periodische Funktion und in jeder Periode 544 der Variationsfunktion sind zumindest zwei der in der ersten Richtung 549 aufeinanderfolgende Elemente 542 voneinander mit dem Abstand 545 voneinander beabstandet.

In dem Ausführungsbeispiel nach Fig. 7a und Fig. 7b bilden die Elemente 542 hierbei Teilbereiche einer Schicht 22 des Substrats 21 aus, und zwar derart, dass die Elementflächen die Reliefstruktur zumindest eines Teilbereichs einer Oberfläche der Schicht 22 bestimmen. In die Schicht 22 wird so zur Herstellung der Beugungsstruktur 54 eine Reliefstruktur 541 abgeformt, die so ausgebildet ist, dass sie eine entsprechende Abfolge von Elementflächen 543 aufweist.

Weiter ist es auch möglich, dass die Elemente 543 von Elementen gebildet sind, welche in einer transparenten Schicht des Substrats 21 eingebettet sind. Diese Ausführungsform ist in den Figuren Fig. 8a und Fig.

8b verdeutlich, wobei bzgl. der Anordnung und Ausbildung der Elemente 542 auf die diesbezüglichen Ausführungen nach Fig. 7a und Fig. 7b verwiesen wird.

Die Periode 544 wird hierbei bevorzugt kleiner als 10 µm und größer als 1 µm und insbesondere kleiner als 5 µm und größer als 2 µm gewählt.

Der Abstand 545 liegt bevorzugt im Bereich von 50 nm bis 1000 nm, weiter bevorzugt zwischen 100 nm und 500 nm.

Die Anzahl der Elemente 542 pro Periode wird bevorzugt zwischen 3 und 10, weiter bevorzugt zwischen 3 und 6 gewählt. Die maximale Relieftiefe pro Periode beträgt hierbei bevorzugt weniger als 2 µm.

Als Variationsfunktion werden bevorzugt Funktionen eingesetzt, welche wie in Fig. 7a bis Fig. 8b gezeigt eine treppenstufenförmige, periodische Abfolge der Elementflächen 543 beschreiben. Neben der asymmetrischen Anordnung der Stufen innerhalb der Periode 544, wie in den Figuren 7a bis 8b gezeigt, ist es jedoch auch möglich, dass eine symmetrische Anordnung der Stufen beispielsweise in Form einer Stufenpyramide erfolgt.

Bei der Ausführungsform nach Fig. 8a und Fig. 8b beträgt die Dicke 547 der Elemente 542 vorzugsweise zwischen 10 nm und 600 nm, weiter bevorzugt zwischen 50 nm und 400 nm. Die Elemente 442 werden hierbei bevorzugt von einer hochbrechenden Schicht, d.h. einer HRI-Schicht gebildet, welche aus einer der bereits vorgehend hierfür beschriebenen Materialien gebildet sein kann. Die die Elemente 542 umgebende Schicht 22 besteht vorzugsweise aus eine polymeren, transparenten Kunststoffmaterial mit einem Brechungsindex von etwa 1,5.

Durch die Beugungsstrukturen 54 und 55 lassen sich interessante Effekte erzielen. Durch die Wahl des Abstands 554 wird die sich unter unterschiedlichen Winkeln in Transmission zeigende Farbe stark beeinflusst und durch die Periode 544 wird der Kippwinkel eingestellt, unter dem sich eine Änderung der das Farbspektrum beeinflussenden Eigenschaften der Beugungsstrukturen 54 und 55 ergibt. Der sich bei senkrechter Betrachtung zeigende Farbeindruck wird hierbei stark durch den Abstand 554 bestimmt.

Durch entsprechende Wahl des Abstands 554 lässt sich hierbei nicht nur der Effekt erzielen, dass bei senkrechter Betrachtung die Beugungsstrukturen 54 und 55 einen farbigen Eindruck bei Durchlichtbetrachtung generieren und beim Verkippen das Element farbneutral wird, sondern es kann auch ein dunkles oder schwarzes Erscheinungsbild erzielt werden. Wird so beispielsweise bei der in Fig. 7a bis Fig. 8b gezeigten Ausbildung der Reliefstrukturen 54 und 55 die gesamte Gittertiefe mit 1500 nm (Abstand 554 = 300 nm) und die Periode mit 2500 nm gewählt, ergibt sich ein spektrales Verhalten, bei dem der Spektralbereich von 460 bis 660 in Transmission bei senkrechter Betrachtung kleiner als 10% ist und bei einem Kippwinkel von 55 Grad bis 65 Grad moderat transparent (t > 30%) ist und damit bei Hinterleuchtung erkennbar ist.

Mittels der oben beschriebenen Beugungsstrukturen 51 bis 55 lassen sich durch Wahl der Strukturparameter wie oben beschrieben die optischen Eigenschaften des Bereichs 30 derart verändern, dass insbesondere bei Durchlichtbetrachtung gegen ein weißes Licht abstrahlende Lichtquelle beim Verkippen des Sicherheitselements zwei unterschiedliche Farbeffekte zeigen. So kann der Bereich 30 oder ein Teilbereich des Bereichs 30 beispielsweise bei senkrechter Betrachtung (ungekippt) transparent sein und beim Verkippen eine Farbe zeigen oder umgekehrt, je nach Wahl der entsprechenden Strukturparameter.

Die hierdurch erzielbaren Effekte und vorteilhafte Anordnungen der mit solchen Beugungsstrukturen belegten Bereiche innerhalb des Bereichs 30 werden im Folgenden anhand von mehreren Ausführungsbeispielen beschrieben.

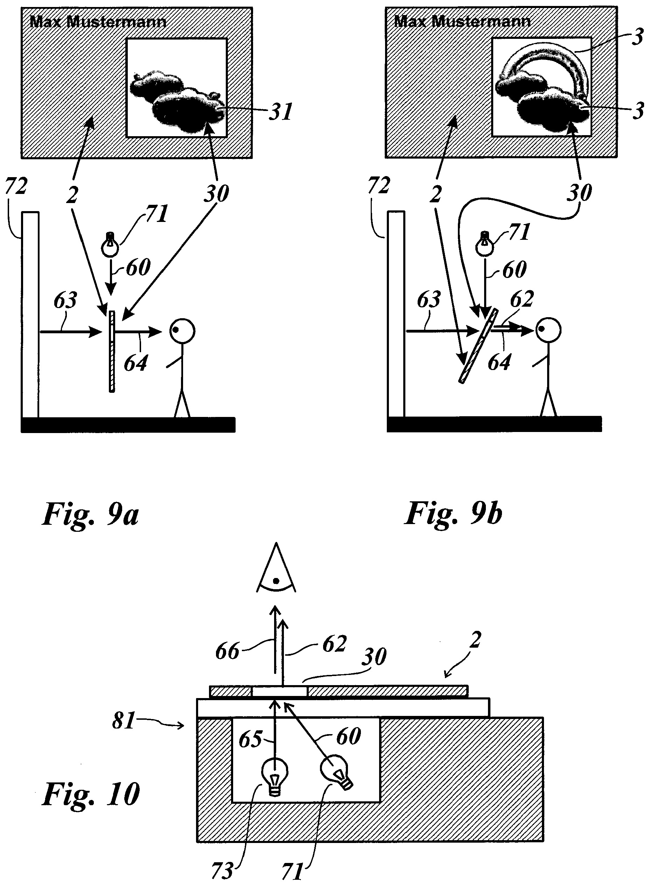

Fig. 9a zeigt eine erste Betrachtungssituation eines Sicherheitselements 2 und Fig. 9b eine zweite Betrachtungssituation des Sicherheitselements 2.

In der Betrachtungssituation nach Fig. 9a betrachtet der Betrachter das Sicherheitselement 2 gegen eine weißes Licht streuende, indirekte Lichtquelle. Hier wird diese indirekte Lichtquelle von einer angeleuchteten, weiß gefärbten Wand 72 gebildet. Typischerweise streuen weiße Wände Licht wie ein Lambertscher Strahler. Weiter ist eine Lichtquelle 71 vorgesehen, welche weißes Licht gerichtet aussendet. Das von der indirekten Lichtquelle 72 ausgesendete Licht 63 und das von der Lichtquelle 71 ausgesendete Licht 60 schließen hier einen 90-Grad-Winkel ein. Bei der Betrachtungssituation nach Fig. 9a wird das Sicherheitselement 2, wie in Fig. 9a gezeigt, senkrecht gehalten und bei der Betrachtungssituation nach Fig. 9b gegenüber der Position nach Fig. 9a verkippt. Beim Hin- und Herkippen zwischen den Positionen des Sicherheitselements 2 nach Fig. 9a und Fig. 9b ändert sich das optische Erscheinungsbild des Bereichs 30, wie in Fig. 9a und Fig. 9b gezeigt. So ist dort beispielsweise in dem Teilbereich 31 eine blaue Wolke gezeigt und beim Verkippen gemäß Fig. 9b zeigt sich zusätzlich in einem Teilbereich 32 ein Regenbogen.

Zur Bereitstellung dieses optischen Effekts sind hierzu in den Teilbereichen 31 und 32 unterschiedliche der vorgehend beschriebenen transmissiven Beugungsstrukturen angeordnet, wobei die im Teilbereich 31 angeordnete transmissive Beugungsstruktur entsprechend ausgelegt ist, um bei beiden Betrachtungssituationen das Farbspektrum bei Transmission derart zu verändern, dass sich eine blaue Einfärbung zeigt, d. h. das Licht 63 zum Licht 64 verändert, und die im Teilbereich 32 angeordneten Beugungsstrukturen so gewählt sind, dass sich bei der Betrachtungssituation nach Fig. 9a das Farbspektrum nicht oder nur wenig geändert wird und erst ab einem bestimmten Kippwinkel eine Beeinflussung des Farbspektrums des transmittierten Lichts zur Darstellung des Regenbogens generiert wird, d. h. das Licht 60 in das Licht 62 geändert wird. Zur Erzielung dieses Effekts werden vorzugsweise unterschiedliche der oben beschriebenen Klassen von Beugungsstrukturen für die Teilbereiche 31 und 32 eingesetzt, um so eine besonders kontrastierende Wirkung zwischen den Bereichen 31 und 32 zu erzielen. So werden beispielsweise für den Teilbereich 32 transmissive Beugungsstrukturen vorgesehen, welche wie die Beugungsstrukturen 51 und 52 aufgebaut sind und für die im Teilbereich 31 angeordneten Beugungsstrukturen Beugungsstrukturen vorgesehen, welche wie die Beugungsstrukturen 53 bis 55 ausgebildet sind.

Fig. 10 zeigt eine entsprechende Vorrichtung 81 zur Überprüfung eines derartigen Sicherheitselements 2. Die Vorrichtung 81 weist so zwei Lichtquellen 71 und 73 auf, welche Licht 60 und 65 in einem Winkelversatz zueinander gerichtet auf das in einer Führungsvorrichtung gehaltene Sicherheitselement 2 emittieren. Durch Ein- und Ausschalten der einen oder anderen Lichtquelle 71 bzw. 73 kann ein Kippen des Sicherheitselements um den Winkelversatz zwischen der Strahlrichtung des von den Lichtquellen 71 und 73 emittierten Lichts simuliert werden, sodass der Betrachter beispielsweise die Darstellung nach Fig. 9b im Bereich 30 sieht, wenn beide Lichtquellen 71 und 73 aktiviert sind und die Darstellung nach Fig. 9a sieht, wenn lediglich die Lichtquelle 73 aktiviert ist.

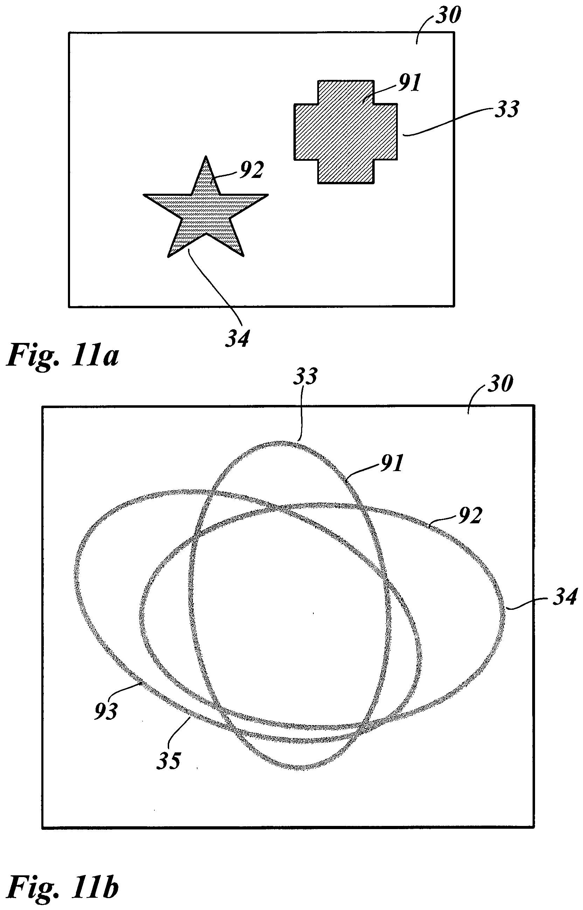

Fig. 11a bis Fig. 11c verdeutlichen mögliche Ausführungsformen eines Sicherheitselements 2, bei dem im Bereich 30 zwei oder mehr musterförmige Teilbereiche vorgesehen sind, die mit unterschiedlichen transmissiven Beugungsstrukturen belegt sind, die bei Durchlichtbetrachtung ein oder mehrere optische Sicherheitsmerkmale zeigen.

Fig. 11a zeigt so einen Bereich 30 mit einer Zone 33, welche mit einer transmissiven Beugungsstruktur 91 belegt ist, und einer Zone 34, welche mit einer transmissiven Beugungsstruktur 92 belegt ist. Die Beugungsstrukturen 91 und 92 sind wie eine der oben beschriebenen Beugungsstrukturen 51 bis 55 ausgebildet, sodass diesbezüglich auf obige Ausführungen verwiesen wird. Bei den Beugungsstrukturen 91 und 92 handelt es sich um unterschiedliche Beugungsstrukturen, insbesondere unterschiedlich der oben beschriebenen Beugungsstrukturen 51 bis 55. Weiter ist es auch möglich, dass die Beugungsstrukturen 91 und 92 aus derselben Klasse von Beugungsstrukturen ausgewählt sind, sich jedoch in ihren Strukturparametern und damit ihren optischen Eigenschaften unterscheiden. So ist es beispielsweise möglich, dass die Beugungsstrukturen 91 und 92 sich in ihrer Relieftiefe, ihrem Azimutwinkel und/oder ihrer Gitterperiode unterscheiden.

Die Zonen 33 und 34 sind jeweils musterförmig in Form eines Motivs ausgebildet, nämlich in Form eines Kreuzes und eines Sterns ausgebildet, wie dies in Fig. 11a gezeigt ist. Die Zonen 33 und 34 weisen weiter vorzugsweise laterale Abmessungen von mehr als 300 $\mu$m, insbesondere von mehr als 500 $\mu$m auf, insbesondere eine Breite und eine Länge zwischen 1 mm und 25 mm, weiter bevorzugt zwischen 5 mm und 15 mm auf.

Bei dem Ausführungsbeispiel nach Fig. 11b sind nicht nur zwei Zonen 33 und 34, sondern mehrere Zonen, nämlich die Zonen 33, 34 und 35 vorgesehen, welche in Form von dünnen Linien ausgebildet sind. Die Linien besitzen vorzugsweise eine Breite von weniger als 300 $\mu$m, weiter bevorzugt von weniger als 100 $\mu$m und eine Länge von mehr als 300 $\mu$m, weiter bevorzugt von 1 mm Die Linien sind hier vorzugsweise in Form eines komplexen Musters, beispielsweise einer Guilloche ausgeformt. Weiter sind die Teilbereiche 33, 34 und 35 mit unterschiedlichen transmissiven Beugungsstrukturen belegt, die wie die Beugungsstrukturen 51 bis 55 ausgebildet sind, hier mit den Beugungsstrukturen 91, 92 und 93 belegt.

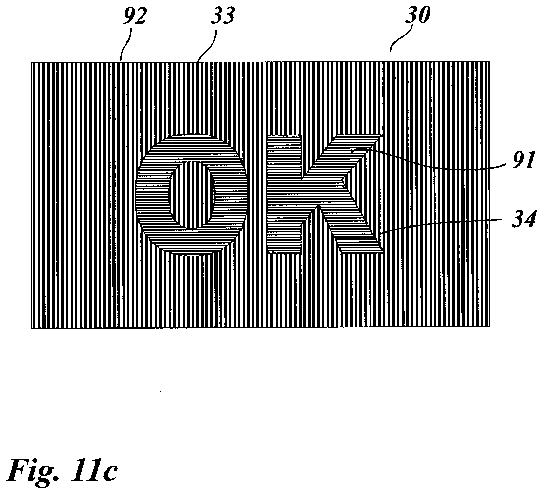

Bei dem Ausführungsbeispiel nach Fig. 11c bilden die Zonen 33 und 34 ein gemeinsames Motiv aus, wobei die Zone 33 den Hintergrundbereich und die Zone 34 den Vordergrundbereich des Motivs ausbildet. Die Zone 33 und die Zone 34 sind hierbei mit unterschiedlichen Beugungsstrukturen belegt, die wie die oben beschriebenen Beugungsstrukturen 51 bis 55 ausgebildet sind. Vorzugsweise unterscheiden sich hierbei die Beugungsstrukturen 91 und 92 in ihrem Azimutwinkel, sind vorzugsweise in Bezug auf ihren Azimutwinkel um 45 Grad oder 90 Grad gegeneinander verdreht angeordnet. Werden die Parameter der Beugungsstruktur 90 und 92 ansonsten gleich gewählt, so zeigen die Zonen 91 und 92 bei senkrechter Betrachtung im Durchlicht den selben optischen Effekt, sodass das Motiv aufgrund eines fehlenden Kontrastes zwischen Vordergrund- und Hintergrundbereich nicht sichtbar ist. Beim Verkippen wird sodann das Motiv erkennbar.

Dasselbe gilt für ein Verdrehen im gekippten Zustand: Im unverdrehten Zustand (z.B. Azimutwinkel 0°) zeigen die Zonen 91 und 92 denselben optischen Effekt, sodass das Motiv aufgrund eines fehlenden Kontrastes zwischen Vordergrund- und Hintergrundbereich nicht sichtbar ist. Beim Verdrehen um einen Drehwinkel (z.B. Winkel 45° oder 90° oder 180°) wird sodann das Motiv erkennbar.

Vorzugsweise sind bei der Ausbildung als Vorder- und Hintergrundbereich die mit den unterschiedlichen Beugungsstrukturen belegten Zonen weniger als 10 $\mu$m, bevorzugt weniger als 5 $\mu$m und weiter bevorzugt weniger als 2000 nm voneinander entfernt angeordnet.

Die Beugungsstrukturen 91 bis 93 werden bei den obigen Ausführungsbeispielen nach Fig. 11a bis Fig. 11c vorzugsweise so ausgelegt, dass sich bei Durchlichtbetrachtung gegen eine Lichtquelle, welche weißes Licht parallel zu einer Strahlachse auf die Rückseite des Sicherheitselements 2 aussendet, beim Verkippen des Sicherheitselements gegen die Strahlachse eine Veränderung der Farbe der Zonen 33, 34 bzw. 35 zeigt. Weiter sind die Beugungsstrukturen 91 bis 93 vorzugsweise so ausgelegt, dass das in einer Strahlrichtung senkrecht zu der von der Rückseite des Sicherheitselements 2 aufgespannten Ebene einfallende Licht weitgehend in sein Farbspektrum unverändert in Richtung der Strahlrichtung durch das Substrat transmittiert wird, sodass bei dieser Betrachtungssituation der Bereich 30 insbesondere transparent und klar erscheint und durch den Bereich 30 beispielsweise dahinterliegende Objekte sichtbar sind. Dies erhöht zusätzlich die Sicherheit des Sicherheitselements 2.

Bei farbiger Beleuchtung wird der entsprechende von den Beugungsstrukturen 91 bis 93 generierte Effekt noch von dem Farbeffekt des Beleuchtungsspektrum überlagert.

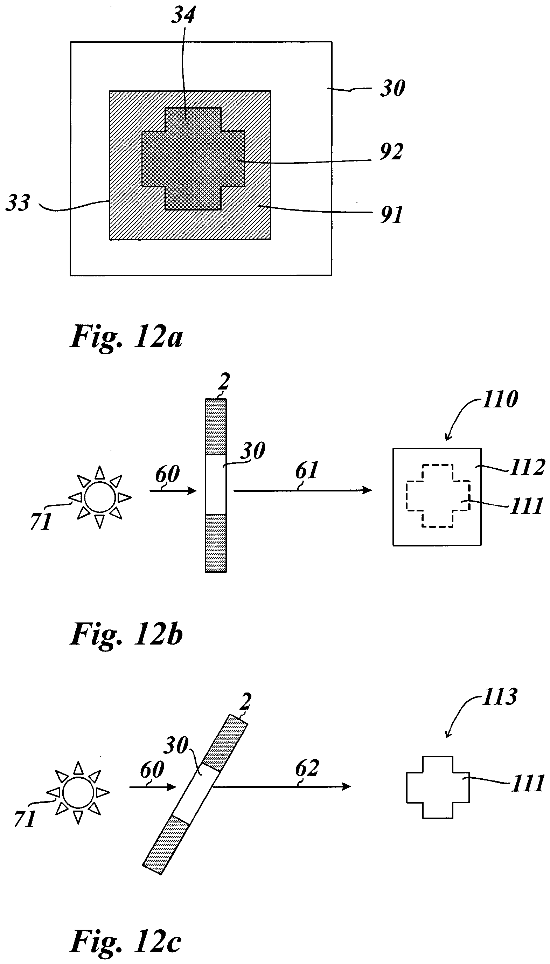

Ein weiteres Ausführungsbeispiel, bei dem die Zonen 91 und 92 Vorder- und Hintergrundbereich eines Motivs bilden, wird im Folgenden anhand der Figuren Fig. 12a bis Fig. 12c verdeutlicht.

Fig. 12a zeigt einen Bereich 30 des Sicherheitselements 2. Die Zone 34 ist musterförmig in Form eines Kreuzes ausgebildet und die Zone 33 als Hintergrundbereich zu der Zone 34 ausgebildet. Die Bereiche 33 und 34 sind mit den Beugungsstrukturen 91 und 92 belegt. Die Beugungsstrukturen 91 und 92 werden hierbei von einem der Beugungsstrukturen 51 bis 55 gebildet, sodass diesbezüglich auf obige Ausführungen verwiesen wird. Die beiden Beugungsstrukturen 91 und 92 sind hierbei so bevorzugt ausgelegt, dass sie in zumindest einer Betrachtungssituation den gleichen optischen Effekt zeigen, beispielsweise im Durchlicht farbneutral sind und das Farbspektrum nicht oder nur geringfügig verändern.

So zeigen beispielsweise in Betrachtungssituation nach Fig. 12b, bei der das Sicherheitselement 2 rechtwinkelig zu der Strahlrichtung eines von einer Lichtquelle 71 ausgestrahlten Lichts 60 gehalten wird, die Zonen 33 und 34 den selben optischen Effekt, d.h. beispielsweise dass bei dieser Betrachtungssituation das Farbspektrum nicht oder auf die gleich Weise verändert wird. Von dem durch den Bereich 30 transmittierten Licht 61 wird bei dieser Betrachtungssituation so das Bild 110 generiert, bei dem Vordergrund 111 und Hintergrund 112 die gleiche Farbe besitzen und so nicht von einander unterscheidbar sind. Beim Verkippen unterscheidet sich sodann die Beeinflussung des transmittierten Lichts durch die Beugungsstrukturen 91 und 92, sodass das transmittierte Licht 62 ein Bild 113 zeigt, in dem beispielsweise ein Motiv in Form eines Kreuzes 111 sichtbar ist. Sind die Beugungsstrukturen 91 und 92 identische lineare Gitter und lediglich um 90° im Azimutwinkel gedreht angeordnet, so zeigt das Sicherheitselement 2 beim Verdrehen im gekippten Zustand einen Farbflip - das Kreuz und der Hintergrund tauschen die farbliche Erscheinung.

Weiter ist es auch möglich, Beugungsstrukturen 91 und 92 so zu wählen, dass unter sämtlichen Kippwinkeln von den Beugungsstrukturen 91 und 92 das Farbspektrum unterschiedlich verändert wird, sodass ein Kontrast zwischen Vordergrund und Hintergrund über einen weiteren Kippwinkelbereich sichtbar ist, sich jedoch jeweils die Farbe des Vorder- und Hintergrunds abhängig vom Kippen verändert.

Weitere im Folgenden beschriebene vorteilhafte Ausführungsformen weisen eine Vielzahl von unterschiedlichen Zonen in dem Bereich 30 auf, die jeweils zumindest eine laterale Abmessung von weniger als 300 μm aufweisen.

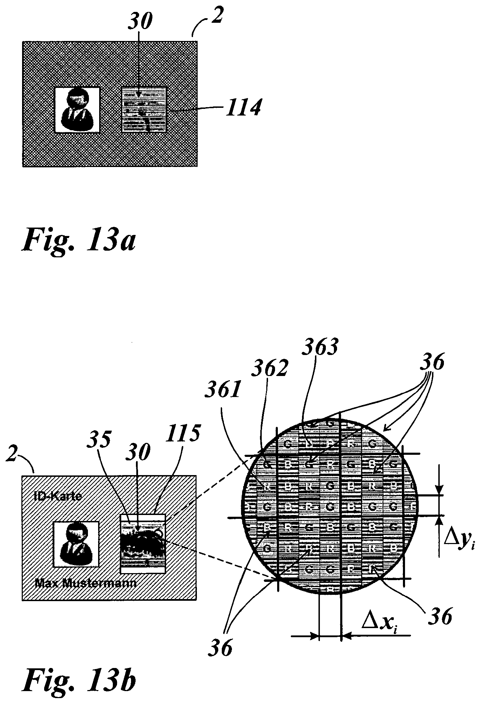

Bei dem Ausführungsbeispiel nach Fig. 13a und Fig. 13b wird eine farbige Darstellung eines Motivs unter einem bestimmten Kippwinkelbereich generiert, welche durch Farbmischung von zwei oder mehrere von den transmissiven Beugungsstrukturen generierten Grundfarben bereitgestellt wird.

Wie in Fig. 13b angedeutet, ist in dem Bereich 30 des Sicherheitselements 20 ein Motivbereich 35 vorgesehen, welcher beispielsweise hier in Form eines Elches ausgeformt ist. Dieser Motivbereich ist in eine Vielzahl von Bildpunktbereichen 36 unterteilt. In jedem der Bildpunktbereiche 36 wird nun der Farbwert und die Helligkeit bestimmt, welche dieser Bildpunktbereich zur Ausbildung des Motivs, nämlich des Elchs, besitzen soll. In den Bildpunktbereichen 36 werden nun abhängig von diesen Werten kein, eine, zwei oder drei unterschiedliche der Zonen 361, 362 und 363 vorgesehen. Die Zonen 361 sind hierbei mit einem transmissiven Beugungsgitter zur Generierung einer roten Farbe unter dem bestimmten Kippwinkelbereich belegt, die Zonen 362 mit einem hiervon unterschiedlichen transmissiven Beugungsgitter zur Erzeugung einer grünen Farbe unter dem bestimmten Kippwinkelbereich belegt und die Zonen 363 mit einem hiervon unterschiedlichen transmissiven Beugungsgitter zur Generierung einer blauen Farbe unter dem bestimmten Kippwinkelbereich belegt. Die Abmessung der Bildpunktbereiche 36 ist hierbei so gewählt, dass eine Farbmischung der dort jeweils angeordneten unterschiedlichen der Zonen 361 bis 363 bewirkt wird. Die Bildpunktbereiche 36 weisen so vorzugsweise in zumindest eine Richtung eine laterale Abmessung von weniger als 300 μm auf. Die Zonen 361 bis 363 weisen ebenfalls in zumindest eine Richtung eine Abmessung von weniger als 300 μm, bevorzugt weniger als 150 μm, weiter bevorzugt weniger als 80 μm auf. Weiter ist die Breite und / oder Länge der Zonen 361 bis 363 vorzugsweise größer als 20 μm, 10 μm oder 5 μm gewählt.

Durch das Verhältnis der Flächengröße der Zonen 361 bis 363 in dem jeweiligen Bildpunktbereich 36 wird der Farbwert und durch die gesamte Flächengröße der Zonen 361 bis 363 in dem jeweiligen Bildpunktbereich 36 wird die Helligkeit des jeweiligen Bildpunkts auf den entsprechend vorgegebenen Wert eingestellt.

Die in die Zonen 361 bis 363 angeordneten Beugungsgitter sind vorzugsweise wie das Beugungsgitter 52 ausgebildet, wobei hier vorzugsweise folgende Strukturparameter für die jeweilige Beugungsstruktur verwendet werden:

Beugungsgitter der Zonen 361 (rot): Gitterperiode = 770 nm; Dicke der HRI-Schicht = 120 nm; Gittertiefe = 570 nm; Reliefform sinusförmig.

Beugungsgitter der Zonen 362 (grün): Gitterperiode = 650 nm; Schichtdicke der HRI-Schicht = 120 nm; Relieftiefe = 450 nm; Reliefform sinusförmig.

Beugungsgitter der Zonen 363 (blau): Gitterperiode = 570 nm; Dicke der HRI-Schicht = 120 nm; Relieftiefe = 400 nm; Reliefform sinusförmig.

Es ist jedoch auch möglich, dass die Zonen 361 bis 363 gemäß einem der Beugungsgitter 51, 54 oder 55 ausgebildet sind, oder von unterschiedlichen der Beugungsgitter 51 bis 55 gebildet werden. Dies ist insbesondere dann vorteilhaft, wenn unter unterschiedlichen Kippwinkeln beispielsweise ein unterschiedliches farbiges Erscheinungsbild des Motivs erzielt werden soll.

Es können auch zwei oder mehr Bilder ineinander verschachtelt werden. Hierbei werden die Bilder in Zonen zerlegt und dann die einzelnen Zonen der Bilder abwechselnd so angeordnet, dass die Bilder ineinander verschachtelt (interlaced) sind. Die Zonen weisen hierbei bevorzugt in zumindest eine Richtung eine laterale Abmessung von weniger als 300 µm auf, bevorzugt von weniger als 150 µm, weiter bevorzugt von weniger als 80 µm auf. Dies bedeutet, dass in einem Flächenbereich, der in etwa der Größe eines einzelnen Bildes entspricht oder nur wenig größer ist, beide Bilder gleichzeitig angeordnet und dort je nach Betrachtungssituation vorzugsweise einzeln sichtbar sind. Die Beugungsstrukturen der Zonen der verschiedenen Bilder können sich beispielsweise in dem Azimutwinkel unterschieden. D.h. werden z.B. zwei Bilder mit den gleichen Beugungsstrukturen für die Farben Rot, Grün und Blau ineinander verschachtelt, wobei die Beugungsstrukturen des zweiten Bildes um jeweils einen bestimmten Azimutwinkel gegenüber den Beugungsstrukturen des ersten Bildes gedreht angeordnet sind, so werden bei Verdrehen oder Verkippen des Sicherheitselements die zwei Bilder im Wechsel sichtbar.

Für den Betrachter zeigt sich so bei senkrechter Betrachtung des Sicherheitselements 2, beispielsweise gemäß der Betrachtungssituation nach Fig. 12b das in Fig. 13a gezeigte Bild, bei dem der Bereich 3 transparent erscheint und durch den Bereich 30 die hinter dem Sicherheitselement 2 angeordneten Gegenstände als Information 114 sichtbar sind. Beim Verkippen des Sicherheitsdokuments, beispielsweise gemäß Fig. 12c, zeigt sich dann in dem Bereich 30 als Information 115 eine farbige Darstellung eines Elchs.

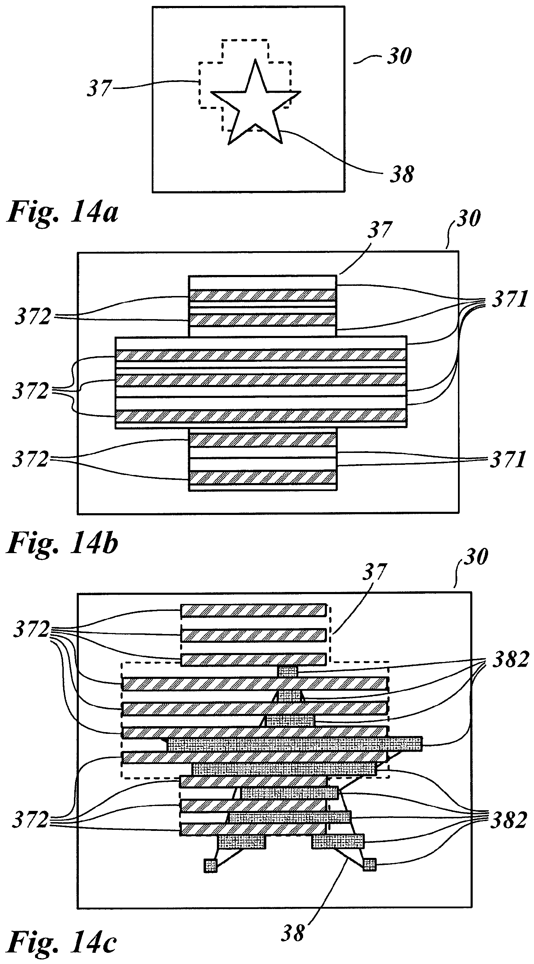

Fig. 14a bis Fig. 18b zeigen weitere Ausführungsformen, bei denen in dem Bereich 30 des Sicherheitselements 2 eine Vielzahl von unterschiedlichen, mit unterschiedlichen Beugungsstrukturen belegten Zonen vorgesehen sind.

Wie in Fig. 14a gezeigt, ist in dem Bereich 30 ein in Form eines Motivs, beispielsweise eines Kreuzes, ausgeformter erster Motivbereich 37 und ein in Form eines zweiten Motivs, beispielsweise eines Sterns, ausgeformter zweiter Motivbereich 38 vorgesehen. Wie in Fig. 14b nicht maßstabsgetreu beispielsweise anhand Motivbereichs 37 gezeigt, ist jeder Motivbereich 37 und 38 in eine Vielzahl von Teilbereiche 371 bzw. 381 geteilt, die jeweils mit ein oder mehreren Zonen 372 bzw. 382 belegt sind. Die Zonen 372 bzw. 382 weisen hierbei jeweils zumindest eine laterale Abmessung von weniger als 300 µm, bevorzugt weniger als 150 µm, weiter bevorzugt weniger als 80 µm auf. Die Zonen 372 bzw. 382 können hierbei eine streifenförmige Formgebung, insbesondere geradlinig verlaufende Streifen oder wellenförmig oder zickzackförmig verlaufende Streifen, besitzen, wie dies in den Figuren Fig. 14b und Fig. 14c gezeigt ist, oder können auch eine pixelförmige Formgebung besitzen, beispielsweise eine kreisscheibenförmige oder rechteckförmige oder andere mehreckige Formgebung besitzen, insbesondere dreieckig, fünfeckig oder mehreckig.

In dem Überlappungsbereich der Motivbereiche 37 und 38 sind die Zonen 372 und 382, wie in Fig. 14c gezeigt, ineinander gerastert angeordnet. Vorzugsweise sind so die Zonen 372 und 382 gemäß eines vorzugsweise regelmäßigen 1- oder 2-dimensionalen Rasters angeordnet, wobei abwechselnd Bereiche für Zonen 371 und Bereiche für Zonen 382 vorgesehen sind. Die von dem jeweiligen Motivbereich überdeckten Bereiche des Rasters, welche den Zonen dieses Motivbereichs zugeordnet sind, sind sodann mit den entsprechenden Zonen belegt, wie dies auch in Fig. 14c angedeutet ist.

Die Zonen 371 und 372 sind jeweils mit unterschiedlichen transmissiven Beugungsstrukturen belegt, welche jeweils gemäß einer der Beugungsstrukturen 51 bis 55 ausgebildet sind. Diesbezüglich wird so auf die vorgehenden Ausführungen verwiesen.

Je nach Wahl dieser Beugungsstrukturen können so beispielsweise mittels einer derartigen Anordnung die im Folgenden beschriebenen optischen Effekte verwirklicht werden:

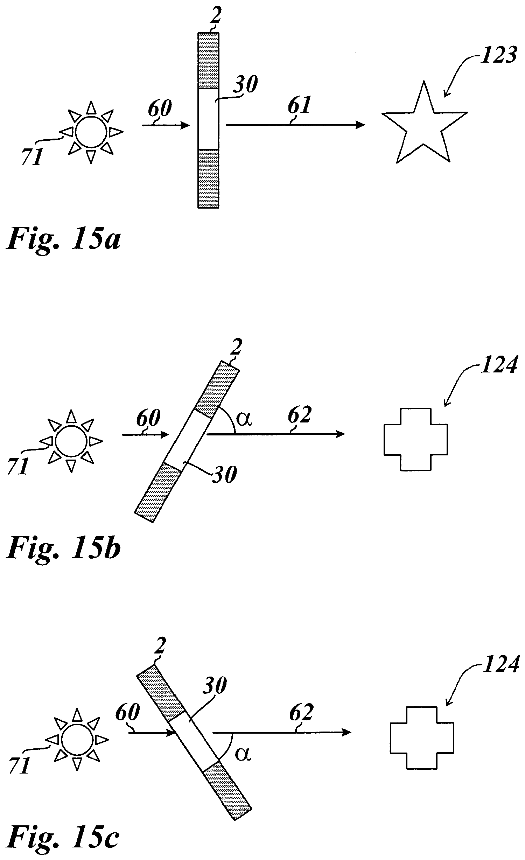

Bei dem Ausführungsbeispiel nach Fig. 15a bis Fig. 15c ist die Beugungsstruktur der Zonen 382 so gewählt, dass diese bei senkrechter Anordnung des Sicherheitselements 2 zur Blickachse das Farbspektrum verändert, sodass das einfallende Licht 60 in seinem Spektrum verändert als Licht 61 durch den Bereich 30 transmittiert wird. Die Beugungsstrukturen, mit der die Zonen 372 belegt sind, ist bei senkrechter Anordnung des Sicherheitselements 2 zur Blickachse farbneutral, verändert jedoch beim Kippen des Sicherheitselements 2 um einen Winkel α das Spektrum des transmittierten Lichts, sodass einem ein Farbspektrum verändertes Licht 62 für den Betrachter sichtbar ist. So zeigt sich dem Betrachter bei Durchlichtbetrachtung bei senkrechter Positionierung des Sicherheitselements 2 gemäß Fig. 15a im Bereich 30 ein Bild 123 eines blauen Sterns und beim Verkippen gemäß Fig. 15b und Fig. 15c ein Bild 124 eines roten Kreuzes.

Vorzugsweise wird hierzu für die Beugungsstruktur, welche die Zonen 372 belegt, eine den Beugungsstrukturen 51 bis 53 entsprechende Beugungsstruktur eingesetzt und für die Beugungsstruktur, welche die Zonen 382 belegt, eine den Beugungsstrukturen 54 und 55 entsprechende Beugungsstruktur eingesetzt.

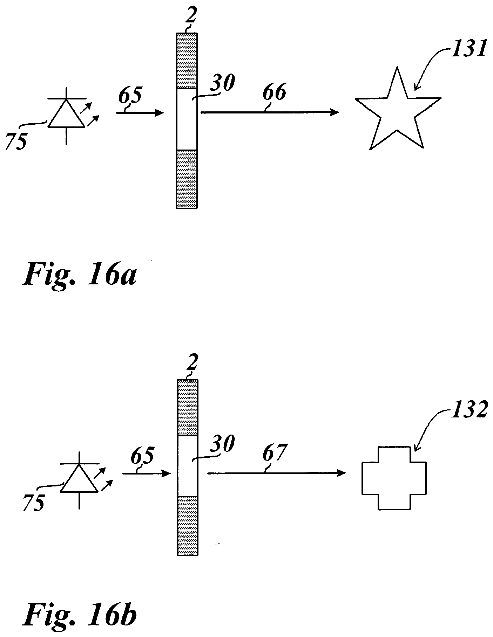

Ein weiteres Ausführungsbeispiel ist in den Figuren Fig. 16a und Fig. 16b gezeigt. Hierbei wird bei der Betrachtungssituation nach Fig. 16a und 16b das Sicherheitselement 2 mit unterschiedlich farbigen, insbesondere monochromatischem Licht 65, z.B. aus einer LED beleuchtet. Die Lichtquelle 75 emittiert so beispielsweise als Licht 65 rotes Licht auf den Bereich 30 des Sicherheitselements 2 und die Lichtquelle 76 blaues Licht als Licht 65 auf den Bereich 30 des Sicherheitselements 2, welches sodann als Licht 66 bzw. 67 auf das Auge des Betrachters fällt. Bei Durchlichtbetrachtung zeigt sich hier für den Betrachter bei der Betrachtungssituation nach Fig. 16a ein Bild 132 eines roten Sterns, und bei Betrachtungssituation nach Fig. 16b ein Bild 132 eines blauen Kreuzes. Die Zonen 372 und 382 sind hierzu vorzugsweise mit unterschiedlichen Beugungsstrukturen belegt, welche gemäß der Beugungsstruktur 53 ausgebildet sind und sich entsprechend in ihrer Gitterperiode unterscheiden.

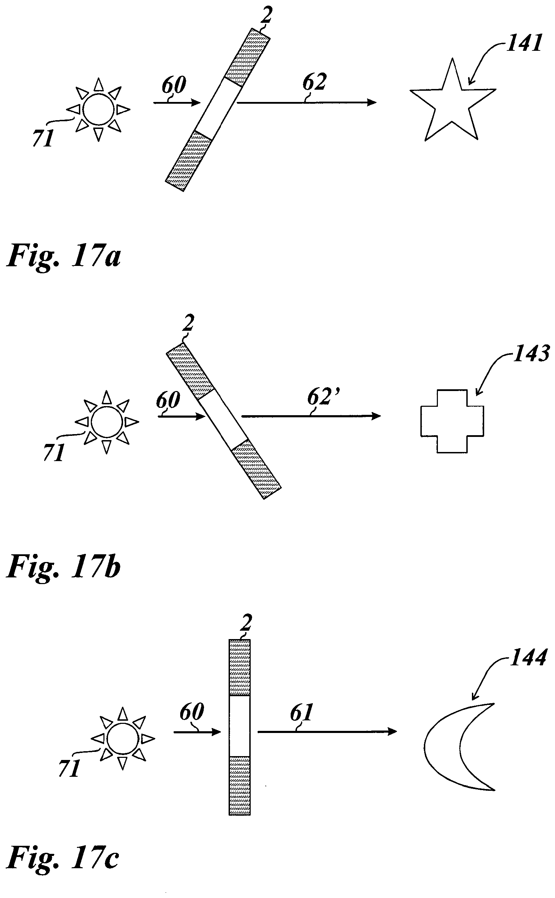

Bei dem Ausführungsbeispiel nach Fig. 17a bis Fig. 17c ist neben den in Form eines Sterns und eines Kreuzes ausgeformten Motivbereich 37 und 38 weiter noch zusätzlich ein in Form eines Halbmondes ausgeformter Motivbereich vorgesehen. Je nach Kippwinkel zeigt sich hier, wie in den Figuren Fig. 17a und Fig. 17b gezeigt, bei Verkippen des Sicherheitselements 2 gegen die Senkrechte zur Blickachse entweder ein Bild 141 eines blauen Sterns oder ein Bild 143 eines grünen Kreuzes, und bei senkrechter Positionierung des Sicherheitselements 2 zur Blickachse Bild 144 eines roten Halbmonds, d. h. das Licht 60 wird in das Licht 61, 62 bzw. 62' gewendet. Die Zonen 372 und 382 sind hierzu mit asymmetrischen Reliefstrukturen belegt, welche vorzugsweise spiegelsymmetrisch zueinander angeordnet sind. Die dem Halbmond-Motiv zugeordneten Zonen weisen hier vorzugsweise eine symmetrische Reliefform auf. Diese Zonen sind vorzugsweise mit einer gemäß den Beugungsstrukturen 54 und 55 ausgebildeten Beugungsstruktur belegt. Die Zonen 372 und 382 sind vorzugsweise mit gemäß den Beugungsstrukturen 51 bis 52 ausgebildeten Beugungsstrukturen belegt.

Weiter ist es vorteilhaft, für die Zonen 372 und 382 spezielle, gemäß den Beugungsstrukturen 54 und 55 ausgebildeten Beugungsstrukturen zu verwenden, welche - wie oben beschrieben - nahezu das gesamte Spektrum des Lichts beeinflussen, sodass beispielsweise bei den Betrachtungssituationen nach Fig. 17a und Fig. 17b ein heller Stern oder ein helles Kreuz erscheint.

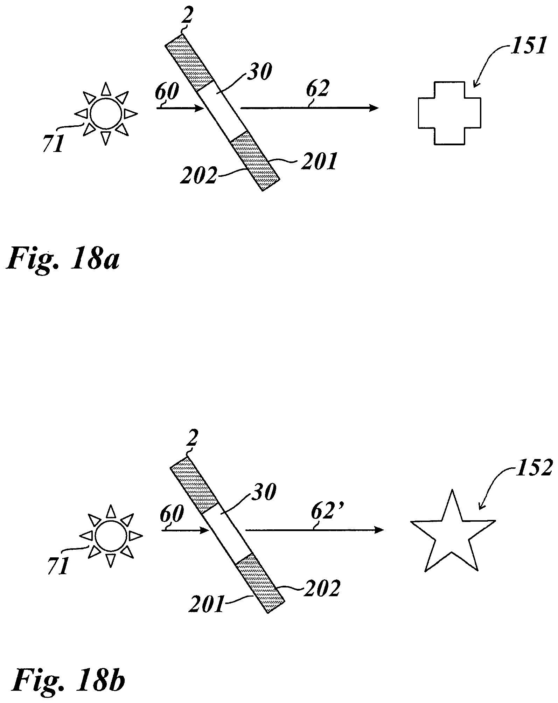

Ein weiterer interessanter Effekt, welcher sich bei der Verwendung von Beugungsstrukturen mit asymmetrischer Reliefform gemäß Fig. 17a und Fig. 17b ergibt, ist in Fig. 18a und Fig. 18b gezeigt. So entspricht die Darstellung nach Fig. 18a der Darstellung nach Fig. 17b, d. h. es zeigt sich bei Betrachtung gemäß dieser Betrachtungssituation im Durchlicht für den Betrachter im Bereich 30 ein Bild 151 eines grünen Kreuzes. Wird nun das Sicherheitselement 2 um 180° gedreht, vorzugsweise in derselben Kippebene, d. h. dass nicht mehr die Seite 202 der Lichtquelle 71 und die Seite 201 dem Betrachter zugewandt ist, sondern dass die Seite 201 der Lichtquelle 701 und die Seite 202 dem Betrachter zugewandt ist, so zeigt sich bei derselben Betrachtungssituation ein blauer Stern. Dieser Effekt kann als zusätzliches Sicherheitsmerkmal ausgenutzt werden.

Weitere interessante zusätzliche Effekte zeigen sich, wenn die Zonen 372 bzw. 383 mit Beugungsstrukturen belegt sind, welche gemäß der Beugungsstruktur 53 ausgebildet sind. Hierbei ist es beispielsweise möglich, dass sich je nach Ausrichtung eines zwischen Lichtquelle 71 und Betrachter angeordneten Polarisators 70 für den Betrachter im Durchlicht im Bereich 30 eine unterschiedliche Information zeigt.

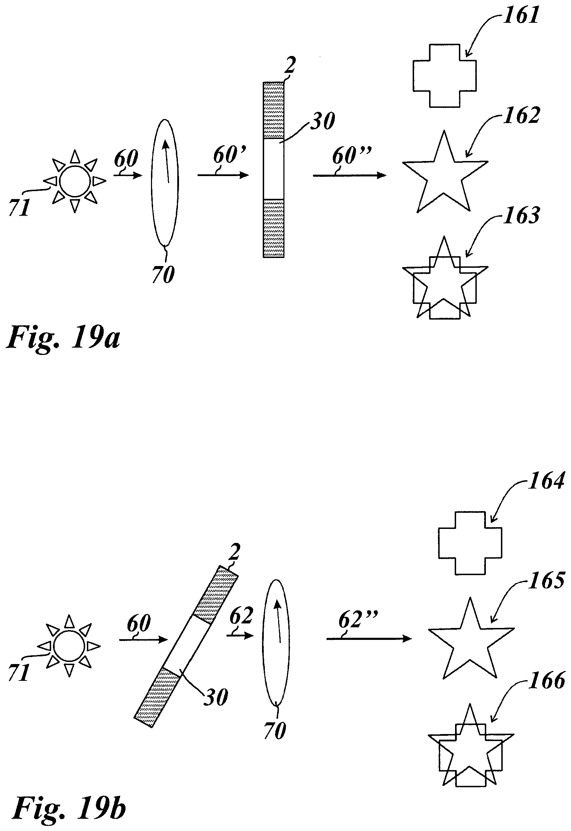

Bei der Ausführungsform nach Fig. 19a transmittiert so das Licht 60 von der Lichtquelle 71 durch den Polarisator 70, wird in das Licht 60' gewandelt, und tritt als Licht 60" auf das Auge des Betrachters.

So zeigt sich, wie in Fig. 19a verdeutlicht, je nach Ausrichtung der Polarisationsachse eines Polarisators 70 zu dem Sicherheitselement 2 für den Betrachter beispielsweise ein Bild 161 eines grünen Kreuzes, ein Bild 162 eines roten Sterns oder ein Bild 163 einer überlagerten Anordnung dieser beiden Elemente. Zur Erzielung dieses Effekts unterscheiden sich hierbei insbesondere die Azimutwinkel der in den Zonen 372 einerseits und 382 andererseits angeordneten Beugungsstrukturen, insbesondere um 90°. Wird der Polarisator 70 nicht in den Strahlengang eingebracht, so ergibt sich bei der Betrachtungssituation nach Fig. 19a im Bereich 30 das Bild 163.

Bei der Ausführungsform nach Fig. 19b wird das Licht 60 der Lichtquelle 71 im Bereich 30 in das Licht 62 gewandelt, welches durch den Polarisator 70 in das Licht 62" gewandelt wird.

Bei der Ausführungsform nach Fig. 19b ergibt sich ein der Fig. 19a entsprechender Effekt bei Betrachtung des Sicherheitselements 2 in einer gegenüber der senkrechten verkippten Anordnung des Sicherheitselements 2, d. h. es zeigt sich auch dort je nach Ausrichtung des Polarisators beispielsweise Bilder 164, 165 bzw. 166 eines blauen Kreuzes, eines roten Sterns oder eines Mischmotivs, das sich auch bei Betrachtung ohne Polarisator bei diesem Kippwinkel zeigt. Auch hier unterscheiden sich die Beugungsgitter der Zonen 372 und 382 insbesondere darin, dass sich ihre Azimutwinkel um 90° unterscheiden.

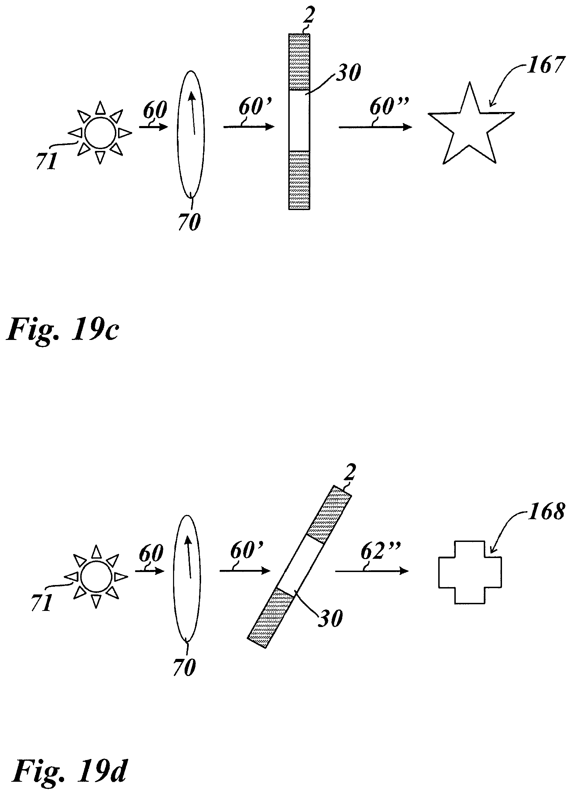

Bei dem Ausführungsbeispiel nach Fig. 19c und Fig. 19d sind in den Zonen 272 und 282 Beugungsstrukturen vorgesehen, welche zum Einen gemäß den Beugungsstrukturen nach Fig. 19a und zum Anderen gemäß den Beugungsstrukturen nach Fig. 19b ausgebildet sind. Bei Einsatz des Polarisators 70 zeigt sich so, wie in Fig. 19c gezeigt, bei senkrechter Anordnung des Sicherheitselements 2 in dem Bereich 30 beispielsweise ein Bild 176 eines roten Sterns, wenn der Polarisator 70 in den Strahlengang eingebracht wird, und bei verkippter Anordnung beispielsweise ein Bild 168 eines grünen Kreuzes, wie dies in Fig. 19d dargestellt ist. Bei Drehen des Polarisators 70 verschwindet der Stern bzw. das Kreuz sodann, was als zusätzliches Sicherheitsmerkmal dient.

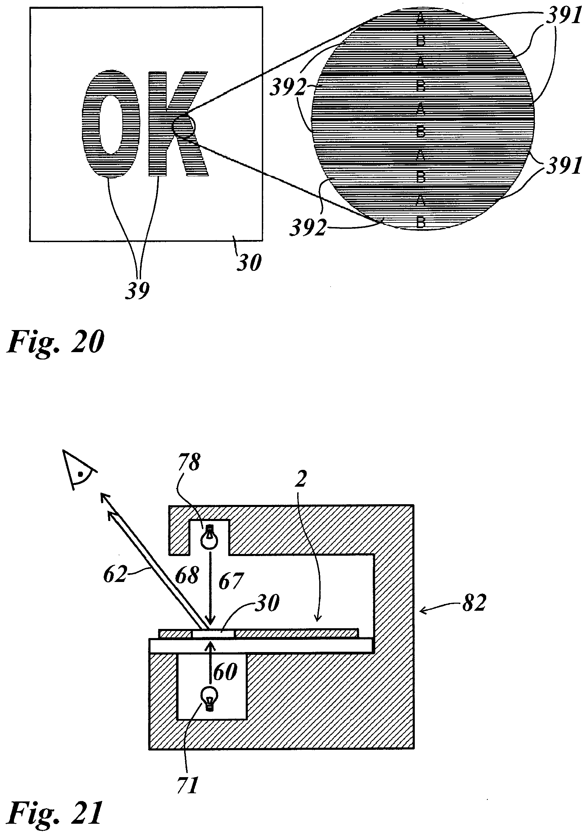

Fig. 20 zeigt ein weiteres Ausführungsbeispiel.

Fig. 20 zeigt den Bereich 30 eines Sicherheitselements 2 mit einem in Form des Motivs "OK" ausgeformten Motivbereichs 39. Der Motivbereich 39 weist eine Vielzahl von Teilbereichen 391 und Teilbereichen 392 auf. Die Teilbereiche 391 sind mit einer transmissiven Beugungsstruktur belegt, welche gemäß den Beugungsstrukturen 51 bis 55 ausgebildet sind. Die Teilbereiche 392 sind mit einer üblichen reflektiven Beugungsstruktur belegt. Die Teilbereiche 391 und 392 weisen jeweils zumindest eine laterale Abmessung von weniger als 300 μm, insbesondere weniger als 150 μm, bevorzugt von weniger als 80 μm auf. Die Teilbereiche 391 und 392 können hierbei zum Einen streifenförmig, wie in Fig. 20 gezeigt, jedoch auch pixelförmig ausgebildet sein. Weiter sind vorzugsweise die Teilbereiche 391 und 392, wie in Fig. 20 gezeigt, abwechselnd nebeneinander angeordnet. In dem Motivbereich 39 wird so bei Durchlichtbetrachtung ein optisches Sicherheitsmerkmal generiert, wie dies beispielsweise bereits anhand der vorgehenden Figuren Fig. 1 bis Fig. 19d erläutert worden ist. Bei Auflichtbetrachtung des Bereichs 30 zeigt sich dem Betrachter weiter eine weitere, lediglich in Auflichtbetrachtung sichtbare Information, welche durch die reflektiven Beugungsstrukturen generiert wird, mit denen die Bereiche 392 belegt sind.

Eine entsprechende Anordnung zur Überprüfung des so bereitgestellten Sicherheitsmerkmals wird beispielhaft anhand von Fig. 21 erläutert. Fig. 21 zeigt eine Vorrichtung 20 zur Überprüfung eines Sicherheitselements 2. Die Vorrichtung 82 weist zwei Lichtquellen 71 und 78 auf, die an gegenüberliegenden Seiten des Sicherheitselements 2 positioniert sind. Das von der Lichtquelle 71 ausgesendete Licht wird durch die transmissiven Beugungsstrukturen der Teilbereiche 391 in seinem Spektrum verändert und als Licht 62 zum Betrachter transmittiert. Das Licht 67 der Lichtquelle 78 wird durch die reflektiven Beugungsstrukturen, welche in den Teilbereichen 391 angeordnet sind, gebeugt und ein Licht 68 zum Betrachter reflektiert. Für den Betrachter zeigt sich so eine überlagerte Anordnung der von den transmissiven Beugungsstrukturen und von den reflektiven Beugungsstrukturen generierten Informationen. Durch Ein- und Ausschaltung der Lichtquelle 71 und 78 lässt sich weiter eine Überprüfung des Effekts realisieren.

**Patentansprüche**

1. Sicherheitselement (2), insbesondere in Form eines mehrschichtigen Folienkörpers, mit einem im Durchlicht transparenten ersten Bereich (30), wobei das Sicherheitselement (2) ein Substrat (21) aufweist, welches in dem ersten Bereich (30) zwei oder mehrere transmissive Beugungsstrukturen (51 bis 55, 91 bis 93) aufweist, die bei Durchlichtbetrachtung ein oder mehrere optische Sicherheitsmerkmale zeigen, **dadurch gekennzeichnet, dass** die zwei oder mehr transmissiven Beugungsstrukturen (51 bis 55, 91 bis 93) unterschiedlich sind, und bei Durchlichtbetrachtung gegen eine weißes Licht abstrahlende Lichtquelle beim Verkippen und/oder Verdrehen des Sicherheitselements unterschiedliche Farbänderungseffekte zeigen, und wobei mindestens eine der zwei oder mehreren transmissiven Beugungsstrukturen (51 bis 55, 91 bis 93) bei Durchlichtbetrachtung einer einem Betrachter zugewandten ersten Seite (201) des Sicherheitselements (2) gegen eine Lichtquelle (71), welche weißes Licht (60) parallel zu einer Strahlachse abstrahlt und auf Seiten einer der ersten Seite (201) des Sicherheitselements gegenüberliegenden zweiten Seite (202) des Sicherheitselements angeordnet ist, beim Verkippen des Sicherheitselements (2) gegen die Strahlachse eine Veränderung der Farbe eines Teilbereichs des ersten Bereichs (30) bewirkt, der mit dieser mindestens einen transmissiven Beugungsstruktur belegt ist, wobei der Teilbereich insbesondere musterförmig in Form eines Motivs ausgeformt ist.

2. Sicherheitselement (2) nach Anspruch 1, **dadurch gekennzeichnet, dass** die ein oder mehreren transmissiven Beugungsstrukturen (51 bis 55, 91 bis 93) so ausgestaltet sind, dass mit ihnen belegte Teilbereiche des ersten Bereichs (30) jeweils bei Durchlichtbetrachtung gegen eine weißes Licht gerichtet abstrahlende Lichtquelle beim Verkippen des Sicherheitselements einen für den menschlichen Betrachter erkennbaren Farbänderungseffekt als optisches Sicherheitsmerkmal zeigen.

3. Sicherheitselement (2) nach Anspruch 1, **dadurch gekennzeichnet, dass** die mindestens eine transmissive Beugungsstruktur (51 bis 55, 91 bis 93) so ausgebildet ist, dass das in einer Strahlrichtung senkrecht zu der von der zweiten Seite (202) des Sicherheitselements aufgespannten Ebene auf die zweite Seite (202) des Sicherheitselements einfallende Licht weitgehend in seinem Farbspektrum unverändert in Richtung der Strahlrichtung durch das Substrat (21) transmittiert wird, wobei hierbei insbesondere die Änderung des Spektrums im Bereich von 460 nm bis 660 nm weniger als 15%, bevorzugt weniger als 10%, weiter bevorzugt weniger als 5% beträgt, insbesondere dass die Transmissivität der mindestens einen transmissiven Beugungsstruktur und / oder des Sicherheitselements in Strahlrichtung größer als 70%, insbesondere größer als 50%, bevorzugt größer als 30% ist.

**4.** Sicherheitselement (2) nach einem der vorhergehenden Ansprüche,
**dadurch gekennzeichnet,**
**dass** der erste Bereich ein oder mehrere erste Zonen (31, 33, 361, 372) aufweist, die mit einer ersten der transmissiven Beugungsstrukturen (91) belegt sind, und ein oder mehrere zweite Zonen (32, 34, 362, 382) aufweist, die mit einer zweiten der transmissiven Beugungsstrukturen (92) belegt sind, wobei sich die erste transmissive Beugungsstruktur (91) von der zweiten transmissiven Beugungsstruktur (92) unterscheidet.

**5.** Sicherheitselement (2) nach Anspruch 4,
**dadurch gekennzeichnet,**
**dass** die erste und zweite transmissive Beugungsstruktur (91, 92) sich in ihrer Relieftiefe, ihrem Azimutwinkel und / oder ihre Gitterperiode unterscheiden, und/oder dass die erste und zweite transmissive Beugungsstruktur (91, 92) von unterschiedlichen Arten von transmissiven Beugungsstrukturen (51 bis 55) gebildet sind, und/oder dass benachbarte erste und zweite Zonen (31 bis 34, 361, 362, 372, 382) weniger als 10 $\mu$m, bevorzugt weniger als 2000 nm, voneinander beabstandet sind.

**6.** Sicherheitselement (2) nach einem der Ansprüche 4 oder 5,
**dadurch gekennzeichnet,**
**dass** in dem ersten Bereich (30) eine Vielzahl erster Zonen (361, 372) und zweiter Zonen (362, 382) vorgesehen ist, und dass die ersten und zweiten Zonen jeweils zumindest eine laterale Abmessung von weniger als 300 $\mu$m, insbesondere weniger als 150 $\mu$m, bevorzugt weniger als 80 $\mu$m aufweist.

**7.** Sicherheitselement (2) nach einem der Ansprüche 4 bis 6,
**dadurch gekennzeichnet,**
**dass** in dem ersten Bereich (30) eine Vielzahl von dritten Zonen (363), die mit einer dritten der transmissiven Beugungsstrukturen belegt sind, und / oder vierten Zonen, die mit einer vierten der transmissiven Beugungsstrukturen belegt sind, vorgesehen sind, wobei sich die ersten, zweiten, dritten und vierten transmissiven Beugungsstrukturen jeweils wechselseitig voneinander unterscheiden und die dritten bzw. vierten Zonen (363) jeweils zumindest eine laterale Abmessung von weniger als 300 $\mu$m aufweisen, insbesondere weniger als 150 $\mu$m, bevorzugt weniger als 80 $\mu$m aufweisen, und/oder dass der erste Bereich (30) eine Motivbereich (35) aufweist, der in eine Vielzahl von Bildpunktbereichen (36) unterteilt ist, dass in zumindest einem ersten der Bildpunktbereiche (36) zumindest zwei unterschiedliche Zonen ausgewählt aus der Gruppe erste und zweite Zonen (361, 362), der Gruppe erste, zweite und dritte Zonen (361, 362 und 363) oder der Gruppe erste, zweite, dritte und vierte Zonen angeordnet sind und dass sich die in dem ersten Bildpunktbereich (36) bei Durchlichtbetrachtung unter zumindest einem Kippwinkel zeigende Farbe durch additive Farbmischung der von den in diesem Bildpunktbereich (36) in den unterschiedlichen Zonen angeordneten der transmissiven Beugungsstrukturen unter diesem Kippwinkel generierten Farben generiert ist.

**8.** Sicherheitselement (2) nach einem der Ansprüche 6 oder 7,
**dadurch gekennzeichnet,**
**dass** in dem ersten Bereich (30) ein in Form eines ersten Motivs ausgeformter erster Motivbereich (37) und ein in Form eines zweiten Motivs ausgeformter zweiter Motivbereich (38) vorgesehen ist, dass der erste Motivbereich (37) in eine Vielzahl von Teilbereichen (371) unterteilt ist, die jeweils mit ein oder mehreren ersten Zonen (372) belegt sind, und der zweite Motivbereich (38) in eine Vielzahl von Teilbereichen (381) unterteilt ist, die jeweils mit ein oder mehreren zweiten Zonen (382) belegt sind, insbesondere dass die ersten und zweiten Zonen (372, 382) jeweils gemäß einem 1- oder 2-dimensionalen Raster angeordnet sind und die ersten und zweiten Zonen in einem Überlappungsbereich ineinander gerastert sind.

**9.** Sicherheitselement (2) nach einem der vorhergehenden Ansprüche,
**dadurch gekennzeichnet,**
**dass** das Substrat (21) in dem ersten Bereich (30) ein oder mehrere reflektive Beugungsstrukturen aufweist, die bei Auflichtbetrachtung ein oder mehrere optische Sicherheitsmerkmale zeigen, insbesondere dass in dem ersten Bereich (30) eine Vielzahl von ersten Teilbereichen (391) vorgesehen sind, die mit einer der ein oder mehreren transmissiven Beugungsstrukturen (51 bis 55) belegt sind, und eine Vielzahl von zweiten Teilbereichen (392) vorgesehen sind, die mit einer der ein oder mehreren reflektiven Beugungsstrukturen belegt sind, dass die ersten und zweiten Teilbereiche (391, 392) jeweils zumindest eine laterale Abmessung von weniger als 300 $\mu$m, insbesondere weniger als 150 $\mu$m, bevorzugt von weniger als 80 $\mu$m aufweisen, und dass zumindest bereichsweise erste und zweite Teilbereiche (391, 392) benachbart zueinander zugeordnet sind, sodass sich im ersten Bereich im Durchlicht eine durch die ersten Teilbereiche bestimmte erste optische Information zeigt und im Auflicht eine durch die zweiten Teilbereiche bestimmte zweite optische Information zeigt.

**10.** Sicherheitselement (2) nach einem der vorhergehenden Ansprüche, **dadurch gekennzeichnet,**
**dass** ein oder mehrere der ein oder mehreren transmissiven Beugungsstrukturen (52, 53, 55) jeweils von einer zwischen zwei transparenten Schichten (22 bis 23) des Substrats ausgeformten Reliefstruktur (521, 531) gebildet sind, wobei sich insbesondere der Brechungsindex dieser Schichten um zumindest 0,1 unterscheidet, insbesondere dass eine der zwei transparenten Schichten eine Replizierschicht und die andere der zwei transparenten Schichten eine poröse Schicht ist, wobei die Poren der porösen Schicht insbesondere mit Luft gefüllt sind.

**11.** Sicherheitselement (2) nach Anspruch 10,
**dadurch gekennzeichnet,**
**dass** die Relieftiefe der Reliefstruktur (511, 521) mehr als 200 nm, insbesondere mehr als 300 nm, bevorzugt mehr als 400 nm beträgt und die Relieftiefe der Reliefstruktur (511, 521) insbesondere kleiner als 1200 nm, bevorzugt kleiner als 1000 nm ist, und/oder dass die Reliefstruktur (511, 521) eine durch die Parameter Reliefform, Relieftiefe, Gitterperiode und Azimutwinkel definiertes Gitter ist und die Relieftiefe zwischen 990 und 1700 nm, insbesondere zwischen 1200 nm und 1500 nm beträgt, und die Gitterperiode zwischen 500 nm und 1500 nm, insbesondere zwischen 600 nm und 1200 nm beträgt, und/oder dass die Reliefstruktur (511, 521) eine asymmetrische Reliefform besitzt, und/oder dass das senkrecht durch die Reliefstruktur (511, 521) in der nullten Ordnung transmittierte Licht in dem Wellenlängenbereich von 460nm bis 660nm weitgehend nicht in seinem Farbspektrum verändert wird und der Transmissionsgrad des in der nullten Ordnung transmittierten Lichts größer als 30%, insbesondere größer als 50% ist.

**12.** Sicherheitselement (2) nach einem der vorhergehenden Ansprüche,
**dadurch gekennzeichnet,**
**dass** die transmissive Beugungsstruktur (53) durch die Parameter Reliefform, Relieftiefe, Gitterperiode und Azimutwinkel definiertes Beugungsgitter nullter Ordnung ist, die Relieftiefe insbesondere zwischen 300 nm und 500 nm, bevorzugt zwischen 350 nm und 500 nm beträgt, und die Gitterperiode insbesondere zwischen 250 und 700 nm, bevorzugt zwischen 350 und 600 nm beträgt, insbesondere dass die Reliefstruktur des Beugungsgitters zwischen einer transparenten Schicht (22) und einer HRI-Schicht (25) abgeformt ist und die Dicke der HRI-Schicht zwischen 70 und 250 nm, insbesondere zwischen 130 und 220 nm beträgt.

**13.** Sicherheitsdokument (1), insbesondere Banknote, mit einem Sicherheitselement (2) nach einem der vorhergehenden Ansprüche.

**Claims**

**1.** Security element (2), in particular in the form of a multilayer film body, having a first region (30) that is transparent in transmitted light, wherein the security element (2) has a substrate (21), which has two or more transmissive diffraction structures (51 to 55, 91 to 93) in the first region (30), which display one or more optical security features when viewed in transmitted light,
**characterised in that**
the two or more transmissive diffraction structures (51 to 55, 91 to 93) are different and display colour change effects when tilting and/or turning the security element when it is viewed in transmitted light against a light source which is emitting white light, and
wherein, when a first side (201) of the security element (2) which is turned towards a viewer is viewed in transmitted light against a light source (71), which emits white light (60) in parallel to a beam axis and is arranged on sides of a second side (202) of the security element which is opposite the first side (201) of the security element, when tilting the security element (2) relative to the beam axis, at least one of the two or more transmissive diffraction structures (51 to 55, 91 to 93) causes a change of the colour of a sub-region of the first region (30), which is covered by this at least one transmissive diffraction structure, wherein the sub-region is shaped in particular in a pattern in the shape of a motif.

**2.** Security element (2) according to claim 1,
**characterised in that**
the one or more transmissive diffraction structures (51 to 55, 91 to 93) are designed in such a way that sub-regions of the first region (30) which are covered by them each display a colour change effect which is recognisable to a human observer as an optical security feature when viewed in transmitted light against a light source that directionally emits a white light when tilting the security element.

**3.** Security element (2) according to claim 1,
**characterised in that**
the at least one transmissive diffraction structure (51 to 55, 91 to 93) is formed in such a way that the light incident on the second side (202) of the security element in a beam direction perpendicular to the plane spanned by the second side (202) of the security element is transmitted through the substrate (21) in the direction of the beam direction largely unchanged in its colour spectrum, wherein here in particular the change in the spectrum ranging from 460 nm to 660 nm is less than 15%, preferably less than 10%, more preferably less than 5%, in particular the transmissivity in the beam direction of the at least one transmissive diffraction structure and/or the security element is greater than 70%, in particular greater than 50%, preferably greater than 30%.

4. Security element (2) according to one of the preceding claims,
**characterised in that**
the first region has one or more first zones (31, 33, 361, 372), which are covered by a first one of the transmissive diffraction structures (91), and one or more second zones (32, 34, 362, 382), which are covered by a second one of the transmissive diffraction structures (92), wherein the first transmissive diffraction structure (91) differs from the second transmissive diffraction structure (92).

5. Security element (2) according to claim 4,
**characterised in that**
the first and second diffraction structures (91, 92) differ in their relief depth, their azimuth angle and/or their grating period, and/or the first and second transmissive diffraction structures (91, 92) are formed from different types of transmissive diffraction structures (51 to 55), and/or adjacent first and second zones (31 to 34, 361, 362, 372, 382) are spaced less than 10 $\mu$m, preferably less than 2000 nm, apart from one another.

6. Security element (2) according to one of claims 4 or 5,
**characterised in that**,
a plurality of first zones (361, 372) and second zones (362, 382) is provided in the first region (30), and the first and second zones each have at least one lateral dimension of less than 300 $\mu$m, in particular less than 150 $\mu$m, preferably less than 80 $\mu$m.

7. Security element (2) according to one of claims 4 to 6,
**characterised in that**,
a plurality of third zones (363), which are covered by a third one of the transmissive diffraction structures and/or fourth zones, which are covered by a fourth one of the transmissive diffraction structures are provided in the first region (30), wherein the first, second, third and fourth transmissive diffraction structures each mutually differ from one another, and the third or fourth zones (363) each have at least one lateral dimension of less than 300 $\mu$m, in particular less than 150 $\mu$m, preferably less than 80 $\mu$m, and/or the first region (30) has a motif region (35) which is divided into a plurality of pixel regions (36), at least two different zones chosen from the group of first and second zones (361, 362), the group of first, second and third zones (361, 362 and 363) or the group of first, second, third and fourth zones are arranged in at least a first of the pixel regions (36), and the colour in the first pixel region (36), which appears when viewed in transmitted light at at least one tilt angle, is generated by additive colour mixing of the colours generated at this tilt angle by those of the transmissive diffraction structures arranged in this pixel region (36) in the different zones.

8. Security element (2) according to one of claims 6 or 7,
**characterised in that**
a first motif region (37) shaped in the form of a first motif and a second motif region (38) shaped in the form of a second motif is provided in the first region (30), the first motif region (37) is divided into a plurality of sub-regions (371), which are each covered by one or more first zones (372), and the second motif region (38) is divided into a plurality of sub-regions (381), which are each covered by one or more second zones (382), in particular the first and second zones (372, 382) are each arranged on a 1- or 2-dimensional grid and the first and second zones are latched together in an overlap region.

9. Security element (2) according to one of the preceding claims,
**characterised in that**
the substrate (21) has one or more reflective diffraction structures in the first region (30), which display one or more security features when viewed in transmitted light, in particular a plurality of first sub-regions (391) are provided in the first region (30), which are covered by one of the one or more transmissive diffraction structures (51 to 55), and a plurality of second sub-regions (392) are provided which are covered by one of the one or more reflective diffraction structures, the first and second sub-regions (391, 392) each have at least one lateral dimension of less than 300 $\mu$m, in particular of less than 150 $\mu$m, preferably of less than 80 $\mu$m, and, at least in some regions, sub-regions (391, 392) are allocated adjacently to one another, such that a first piece of optical information determined by the first sub-regions appears in the first region in transmitted light and a second piece of optical information determined by the second sub-regions appears in incident light.

10. Security element (2) according to one of the preceding claims,
**characterised in that**
one or more of the one or more transmissive diffraction structures (52, 53, 55) are each formed from a relief structure (521, 531) shaped between two transparent layers (22 to 23) of the substrate, wherein in particular the refractive index of these layers varies by at least 0.1, in particular one of the two transparent layers is a replication layer and the other of the two transparent layers is a porous layer, wherein the pores of the porous layer are filled in particular with air.

11. Security element (2) according to claim 10,

characterised in that,
the relief depth of the relief structure (511, 521) is more than 200 nm, in particular more than 300 nm, preferably more than 400 nm, and the relief depth of the relief structure (511, 521) is in particular smaller than 1200 nm, preferably smaller than 1000 nm, and/or the relief structure (511, 521) is a grating defined by the parameters relief shape, relief depth, grating period and azimuth angle, and the relief depth is between 990 and 1700 nm, in particular between 1200 nm and 1500 nm, and the grating period is between 500 nm and 1500 nm, in particular between 600 nm and 1200 nm, and/or the relief structure (511, 521) has an asymmetrical relief shape, and/or the light which is transmitted perpendicular through the relief structure (511, 521) in the zeroth order in the wavelength range from 460 nm to 660 nm is largely unchanged in its colour spectrum and the transmittance of the light transmitted in the zeroth order is greater than 30%, in particular greater than 50%.

12. Security element (2) according to one of the preceding claims,
characterised in that
the transmissive diffraction structure (53) is a zeroth order refraction grating defined by the parameters relief shape, relief depth, grating period and azimuth angle, the relief depth is in particular between 300 nm and 500 nm, preferably between 350 nm and 500 nm, and the grating period is in particular between 250 and 700 nm, preferably between 350 and 600 nm, in particular the relief structure of the diffraction grating is impressed between a transparent layer (22) and an HRI layer (25) and the thickness of the HRI layer is between 70 and 250 nm, in particular between 130 and 220 nm.

13. Security document (1), in particular bank note, having a security element (2) according to one of the preceding claims.

**Revendications**

1. Élément de sécurité (2), en particulier sous forme de corps de film multicouche, avec une première région (30) transparente par transparence, dans lequel l'élément de sécurité (2) présente un substrat (21), lequel présente dans la première région (30), deux ou plusieurs structures de diffraction transmissives (51 à 55, 91 à 93), qui montrent une ou plusieurs caractéristiques de sécurité optiques lors de l'observation par transparence,
caractérisé en ce que les deux ou plusieurs structures de diffraction transmissives (51 à 55, 91 à 93) sont différentes, et lors de l'observation par transparence contre une source de lumière émettant de la lumière blanche montrent différents effets de changement de couleur lors du basculement et/ou de la rotation de l'élément de sécurité, et dans lequel au moins une des deux ou plusieurs structures de diffraction transmissives (51 à 55, 91 à 93) provoque lors de l'observation par transparence d'un premier côté (201) de l'élément de sécurité (2) tourné vers un observateur contre une source de lumière (71), laquelle émet de la lumière blanche (60) parallèlement à un axe de rayonnement et est agencée sur les côtés d'un deuxième côté (202) de l'élément de sécurité opposé au premier côté (201) de l'élément de sécurité, lors du basculement de l'élément de sécurité (2) contre l'axe de rayonnement, une modification de la couleur d'une région partielle de la première région (30), qui est garnie de ladite au moins une structure de diffraction transmissive, dans lequel la région partielle est réalisée sous forme d'un motif en particulier en forme de modèle.

2. Élément de sécurité (2) selon la revendication 1,
caractérisé en ce
que l'une ou plusieurs structures de diffraction transmissives (51 à 55, 91 à 93) sont configurées de telle sorte que des régions partielles de la première région (30) garnies de ces dernières montrent respectivement lors de l'observation par transparence contre une source de lumière émettant de façon dirigée de la lumière blanche lors du basculement de l'élément de sécurité, un effet de changement de couleur perceptible pour l'observateur humain comme caractéristique de sécurité optique.

3. Élément de sécurité (2) selon la revendication 1,
caractérisé en ce
que l'au moins une structure de diffraction transmissive (51 à 55, 91 à 93) est réalisée de telle sorte que la lumière incidente dans une direction de rayonnement perpendiculaire au plan défini par le deuxième côté (202) de l'élément de sécurité sur le deuxième côté (202) de l'élément de sécurité soit transmise de manière largement inchangée dans son spectre de couleurs en direction de la direction de rayonnement par le substrat (21), dans lequel ici en particulier la modification du spectre dans la plage de 460 nm à 660 nm est inférieure à 15 %, de préférence inférieure à 10 %, de manière davantage préférée inférieure à 5 %, en particulier que la transmissivité de l'au moins une structure de diffraction transmissive et/ou de l'élément de sécurité dans la direction de rayonnement est supérieure à 70 %, en particulier supérieure à 50 %, de préférence supérieure à 30 %.

4. Élément de sécurité (2) selon l'une quelconque des revendications précédentes,
caractérisé en ce
que la première région présente une ou plusieurs premières zones (31, 33, 361, 372), qui sont garnies d'une première des structures de diffraction transmissives (91), et présente une ou plusieurs deuxièmes zones (32, 34, 362, 382), qui sont garnies d'une deuxième des structures de diffraction transmissives (92), dans lequel la première structure de diffraction transmissive (91) se distingue de la deuxième structure de diffraction transmissive (92).

**5.** Élément de sécurité (2) selon la revendication 4, **caractérisé en ce que** la première et deuxième structure de diffraction transmissive (91, 92) se distinguent par leur profondeur de relief, leur angle d'azimut et/ou leur période de réseau, et/ou que la première et deuxième structure de diffraction transmissive (91, 92) sont formées de différents types de structures de diffraction transmissives (51 à 55), et/ou que des première et deuxième zones adjacentes (31 à 34, 361, 362, 372, 382) sont espacées l'une de l'autre de moins de 10 μm, de préférence de moins de 2000 nm.

**6.** Élément de sécurité (2) selon l'une quelconque des revendications 4 ou 5, **caractérisé en ce qu'**une pluralité de premières zones (361, 372) et de deuxièmes zones (362, 382) est prévue dans la première région (30), et que les premières et deuxièmes zones présentent respectivement au moins une dimension latérale inférieure à 300 μm, en particulier inférieure à 150 μm, de préférence inférieure à 80 μm.

**7.** Élément de sécurité (2) selon l'une quelconque des revendications 4 à 6, **caractérisé en ce qu'**une pluralité de troisièmes zones (363), qui sont garnies d'une troisième des structures de diffraction transmissives, et/ou de quatrièmes zones, qui sont garnies d'une quatrième des structures de diffraction transmissives sont prévues dans la première région (30), dans lequel les première, deuxième, troisième et quatrième structures de diffraction transmissives se distinguent réciproquement l'une de l'autre et les troisièmes ou quatrièmes zones (363) présentent respectivement au moins une dimension latérale inférieure à 300 μm, en particulier inférieure à 150 μm, de préférence inférieure à 80 μm, et/ou que la première région (30) présente une zone de motif (35), qui est divisée en une pluralité de régions de pixels (36), qu'au moins deux zones différentes sélectionnées dans le groupe première et deuxième zones (361, 362), dans le groupe première, deuxième et troisième zones (361, 362 et 363) ou dans le groupe première, deuxième, troisième et quatrième zones sont agencées dans au moins une première des régions de pixels (36) et que la couleur apparaissant dans la première région de pixels (36) lors de l'observation par transparence selon au moins un angle de basculement est générée par mélange de couleurs additif des couleurs générées par les structures de diffraction transmissives agencées dans cette région de pixels (36) dans les différentes zones selon cet angle de basculement.

**8.** Élément de sécurité (2) selon l'une quelconque des revendications 6 ou 7, **caractérisé en ce qu'**une première région de motif (37) réalisée sous forme d'un premier motif et une deuxième région de motif (38) réalisée sous forme d'un deuxième motif est prévue dans la première région (30), que la première région de motif (37) est divisée en une pluralité de régions partielles (371), qui sont garnies respectivement d'une ou plusieurs premières zones (372), et la deuxième région de motif (38) est divisée en une pluralité de régions partielles (381), qui sont garnies respectivement d'une ou plusieurs deuxièmes zones (382), en particulier que les premières et deuxièmes zones (372, 382) sont agencées respectivement conformément à une trame à 1 ou 2 dimensions et les premières et deuxièmes zones sont tramées l'une dans l'autre dans une région de chevauchement.

**9.** Élément de sécurité (2) selon l'une quelconque des revendications précédentes, **caractérisé en ce que** le substrat (21) présente dans la première région (30) une ou plusieurs structures de diffraction réfléchissantes, qui montrent une ou plusieurs caractéristiques de sécurité optiques lors de l'observation à la lumière incidente, en particulier que dans la première région (30), une pluralité de premières régions partielles (391) sont prévues, qui sont garnies d'une de l'une ou plusieurs structures de diffraction transmissives (51 à 55), et une pluralité de deuxièmes régions partielles (392) sont prévues, qui sont garnies d'une de l'une ou plusieurs structures de diffraction réfléchissantes, que les premières et deuxièmes régions partielles (391, 392) présentent respectivement au moins une dimension latérale inférieure à 300 μm, en particulier inférieure à 150 μm, de préférence inférieure à 80 μm, et qu'au moins par région des premières et deuxièmes régions partielles (391, 392) sont affectées de manière adjacente l'une à l'autre, si bien qu'une première information optique déterminée par les premières régions partielles apparaît dans la première région par transparence et une deuxième information optique déterminée par les deuxièmes zones partielles apparaît à la lumière incidente.

**10.** Élément de sécurité (2) selon l'une quelconque des revendications précédentes, **caractérisé en ce qu'**une ou plusieurs de l'une ou plusieurs structures de diffraction transmissives (52, 53, 55) sont formées respectivement par une structure en relief (521, 531) réalisée entre deux couches transparentes (22 à 23) du substrat, dans lequel en particulier l'indice de réfraction de ces couches se distingue d'au moins 0,1, en particulier qu'une des deux couches transparentes est une couche de réplication et l'autre des deux couches transparentes est une couche poreuse, dans lequel les pores de la couche poreuse sont remplies en particulier d'air.

11. Élément de sécurité (2) selon la revendication 10, **caractérisé en ce**
que la profondeur de relief de la structure en relief (511, 521) est supérieure à 200 nm, en particulier supérieure à 300 nm, de préférence supérieure à 400 nm, et la profondeur de relief de la structure en relief (511, 521) est en particulier inférieure à 1200 nm, de préférence inférieure à 1000 nm, et/ou que la structure en relief (511, 521) est un réseau défini par les paramètres forme de relief, profondeur de relief, période de réseau et angle d'azimut et la profondeur de relief est entre 990 et 1700 nm, en particulier entre 1200 nm et 1500 nm, et la période de réseau est entre 500 nm et 1500 nm, en particulier entre 600 nm et 1200 nm, et/ou que la structure en relief (511, 521) dispose d'une forme de relief asymétrique, et/ou que la lumière transmise d'ordre nul perpendiculairement par la structure en relief (511, 521) n'est largement pas modifiée dans son spectre de couleurs dans la plage de longueur d'onde de 460 nm à 600 nm et le degré de transmission de la lumière transmise d'ordre nul est supérieur à 30 %, en particulier supérieur à 50 %.

12. Élément de sécurité (2) selon l'une quelconque des revendications précédentes, **caractérisé en ce**
que la structure de diffraction transmissive (53) est un réseau de diffraction d'ordre nul défini par les paramètres forme de relief, profondeur de relief, période de réseau et angle d'azimut, la profondeur de relief est en particulier entre 300 nm et 500 nm, de préférence entre 350 nm et 500 nm, et la période de réseau est en particulier entre 250 et 700 nm, de préférence entre 350 et 600 nm, en particulier que la structure en relief du réseau de diffraction est formée entre une couche transparente (22) et une couche HRI (25) et l'épaisseur de la couche HRI est entre 70 et 250 nm, en particulier entre 130 et 220 nm.

13. Document de sécurité (1), en particulier billet de banque, avec un élément de sécurité (2) selon l'une quelconque des revendications précédentes.

*Fig. 1a*

*Fig. 1b*

*Fig. 1c*

*Fig. 2*

*Fig. 3*

*Fig. 4a*

*Fig. 4b*

**Fig. 4c**

**Fig. 4d**

*Fig. 4e*

*Fig. 4f*

*Fig. 4g*

*Fig. 5*

*Fig. 6a*

*Fig. 6b*

*Fig. 6c*

*Fig. 6d*

**Fig. 7a**

**Fig. 8a**

*549*

*54*

*544*

*543*

*542*

*545*

*546*

*22*

*540*

**Fig. 7b**

*549*

*55*

*544*

*547*

*545*

*543*

*542*

*22*

*27*

*540*

**Fig. 8b**

**Fig. 9a**

**Fig. 9b**

**Fig. 10**

**Fig. 11a**

**Fig. 11b**

*Fig. 11c*

**Fig. 12a**

**Fig. 12b**

**Fig. 12c**

**Fig. 13a**

**Fig. 13b**

**Fig. 14a**

**Fig. 14b**

**Fig. 14c**

**Fig. 15a**

**Fig. 15b**

**Fig. 15c**

*2*

*75* *65* *30* *66* *131*

**Fig. 16a**

*2*

*75* *65* *30* *67* *132*

**Fig. 16b**

**Fig. 17a**

**Fig. 17b**

**Fig. 17c**

**Fig. 18a**

**Fig. 18b**

*Fig. 19a*

*Fig. 19b*

**Fig. 19c**

**Fig. 19d**

Fig. 20

Fig. 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008003949 A1
- WO 03070482 A1
- WO 0100418 A1
- WO 2007079548 A1
- DE 102007023560 A1
- EP 0075674 A2
- DE 102008024147 A1
- WO 0102192 A1